(19) Europäisches Patentamt
European Patent Office
Office européen des brevets

(11) EP 3 351 573 B1

(12) **EUROPEAN PATENT SPECIFICATION**

(45) Date of publication and mention of the grant of the patent:
**17.06.2020 Bulletin 2020/25**

(21) Application number: **16846615.9**

(22) Date of filing: **16.09.2016**

(51) Int Cl.:
***C08G 18/66*** *(2006.01)* ***C08G 18/32*** *(2006.01)*
***C08G 18/38*** *(2006.01)* ***C08G 18/48*** *(2006.01)*
***C08K 5/1545*** *(2006.01)* ***C09K 9/02*** *(2006.01)*
***G02B 1/04*** *(2006.01)* ***G02B 5/23*** *(2006.01)*
***G02B 7/12*** *(2006.01)* ***C08G 18/75*** *(2006.01)*

(86) International application number:
**PCT/JP2016/077422**

(87) International publication number:
**WO 2017/047744 (23.03.2017 Gazette 2017/12)**

(54) **MOLDED BODY AND POLYMERIZABLE COMPOSITION FOR OPTICAL MATERIALS**

FORMKÖRPER UND POLYMERISIERBARE ZUSAMMENSETZUNG FÜR OPTISCHE MATERIALIEN

CORPS MOULÉ ET COMPOSITION POLYMÉRISABLE POUR MATÉRIAUX OPTIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.09.2015 JP 2015183494**
**09.12.2015 JP 2015240357**

(43) Date of publication of application:
**25.07.2018 Bulletin 2018/30**

(73) Proprietor: **Mitsui Chemicals, Inc.**
**Minato-ku**
**Tokyo 105-7122 (JP)**

(72) Inventors:
- **KADOWAKI Shinichiro**
**Omuta-shi**
**Fukuoka 836-8610 (JP)**
- **KASORI Yuuki**
**Omuta-shi**
**Fukuoka 836-8610 (JP)**
- **KAWATO Nobuo**
**Omuta-shi**
**Fukuoka 836-8610 (JP)**

(74) Representative: **Mewburn Ellis LLP**
**Aurora Building**
**Counterslip**
**Bristol BS1 6BX (GB)**

(56) References cited:
**WO-A1-2014/002844** **WO-A1-2015/115648**
**JP-A- 2001 512 516** **JP-A- 2004 500 319**
**US-A1- 2011 043 902**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 351 573 B1

## Description

TECHNICAL FIELD

The present invention relates to a molded product including a photochromic compound and a polymerizable composition for an optical material.

BACKGROUND ART

Plastic lenses are lighter and harder to break than inorganic lenses, and thus are rapidly spreading to optical elements such as spectacle lenses and camera lenses. Recently, a plastic lens having a photochromic performance has been developed.

Among them, a lens obtained from poly(thio) urethane is attracting attention because the lens has a high refractive index and excellent physical properties such as strength.

Patent Document 1 describes a lens formed of a composition including a predetermined photochromic compound and a di (meth) acrylate compound. In paragraph 0009, it is described that, in a case where a urethane resin or a thiourethane resin with a high refractive index is used, isocyanate which is a raw material of a resin at a monomer stage reacts with a photochromic compound, and thus a photochromic performance is not exhibited at all.

Patent Document 2 discloses a lens having a coating layer formed of a composition including a photochromic compound having a chromene skeleton and a phenol compound on the surface of a thiourethane-based plastic lens.

Patent Document 3 discloses a photochromic lens having a lens substrate formed of a thiourethane resin and a photochromic film formed by coating the substrate with a solution containing a photochromic compound and a radical polymerizable monomer. Patent Document 4 discloses a compound having photochromic characteristics.

Patent Document 5 discloses a polymerizable composition for an optical material including at least one isocyanate compound selected from an aliphatic isocyanate compound and an alicyclic isocyanate compound, a bifunctional or higher functional active hydrogen compound, and a photochromic compound.

Patent Document 6 describes a polymerizable composition for an optical material including a polyisocyanate compound, a predetermined polyol compound, a bifunctional or higher functional active hydrogen compound, and a photochromic compound. Patent Document 6 discloses that the molar ratio (NCO group / (OH group + SH group)) of the NCO groups contained in the polyisocyanate compound with respect to a sum of OH groups and SH groups included in an active hydrogen compound and a polyol compound is in the range of 0.8 to 1.2 and most preferably in the range of 0.9 to 1.1.

RELATED DOCUMENTS

PATENT DOCUMENTS

[Patent Document 1] Japanese Laid-Open Patent Publication No. H08-272036
[Patent Document 2] Japanese Laid-Open Patent Publication No. 2005-23238
[Patent Document 3] Japanese Laid-Open Patent Publication No. 2008-30439
[Patent Document 4] Japanese Laid-Open Patent Publication No. 2011-144181
[Patent Document 5] Pamphlet of International Publication WO2014/002844
[Patent Document 6] Pamphlet of International Publication WO2015/115648
[Patent Document 7] US Patent No. 6506538
[Patent Document 8] Japanese Laid-Open Patent Publication No. 2005-305306
[Patent Document 9] Pamphlet of International Publication WO2005/087829
[Patent Document 10] Pamphlet of International Publication WO2006/109765
[Patent Document 11] Pamphlet of International Publication WO2007/020817
[Patent Document 12] Pamphlet of International Publication WO2007/020818
[Patent Document 13] Pamphlet of International Publication WO2014/002844
[Patent Document 14] Pamphlet of International Publication WO2015/115648

## SUMMARY OF THE INVENTION

## PROBLEMS TO BE SOLVED BY THE INVENTION

The present inventors examined a photochromic performance of a resin molded product obtained in the example of Patent Document 6. As a result, the present inventors have found that, in the resin composition, in a case where there are more NCO groups than in a case where "the molar ratio (NCO group / (OH group + SH group)) of the NCO groups contained in the polyisocyanate compound with respect to the sum of the OH groups and the SH groups included in an active hydrogen compound and a polyol compound" is 1.0, the deterioration of the photochromic performance is suppressed.

Here, the present inventors have checked residual concentrations of NCO groups and SH groups in resin molded product by an IR analysis method, to find that there was a correlation between the stability of the photochromic performance of the resin molded product and the concentration of the residual SH groups in the resin molded product. Correlation between the stability of a photochromic performance and the concentration of the residual NCO groups was not found. The present inventors have found that the concentration of the residual SH groups in the resin molded product is suppressed in a case where the molar ratio in the resin composition is in a specific range exceeding 1.0. That is, the present inventors have found that, deterioration of a photochromic performance over time is suppressed by causing the molar ratio in the resin composition to be in a predetermined range including many NCO groups and reducing the concentration of the residual SH groups in the resin molded product, such that the concentration was less than a predetermined numerical value.

## MEANS FOR SOLVING THE PROBLEMS

The present invention can be provided below.

[1] A molded product obtainable by polymerizing and curing a polymerizable composition including:

a polyisocyanate compound (A);
a polyol compound (B) which is represented by Formula (1), and which has a number average molecular weight of equal to or greater than 100

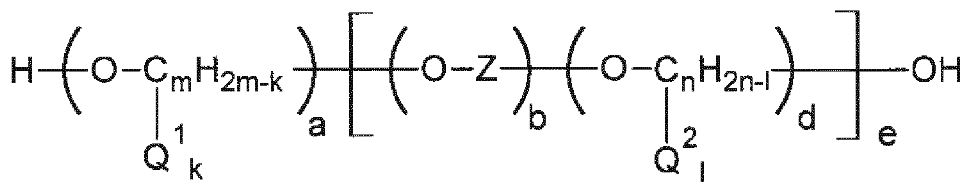

(1)

in Formula (1), m represents a numerical value of 1 to 20, k represents 0 to 2m, n represents a numerical value of 1 to 20, l represents 0 to 2n, a represents a numerical value of equal to or greater than 0, b represents a numerical value of equal to or greater than 0, d represents a numerical value of equal to or greater than 0, e represents a numerical value of equal to or greater than 1, $Q^1$ represents a hydrogen atom or an alkyl group having 1 to 6 carbon atoms, a plurality of $Q^1$'s existing together may be identical to or different from each other, $Q^2$ represents a hydrogen atom or an alkyl group having 1 to 6 carbon atoms, a plurality of $Q^2$'s existing together may be identical to or different from each other, Z represents a divalent organic group having 1 to 30 carbon atoms which may include an aromatic group, and a plurality of Z's existing together may be identical to or different from each other;
a bifunctional or higher functional active hydrogen compound (C) having at least one SH group; and
a photochromic compound (D),
in which a concentration of SH groups measured by an IR analysis method is less than 1.0 wt%.

[2] A molded product according to [1], in which the polyisocyanate compound (A) is one or more selected from the group consisting of hexamethylene diisocyanate, pentamethylene diisocyanate, xylylene diisocyanate, isophorone diisocyanate, bis(isocyanatomethyl) cyclohexane, dicyclohexylmethane diisocyanate, 2,5-bis(isocyanatomethyl)bicyclo-[2.2.1]-heptane, 2,6-bis(isocyanatomethyl)bicyclo-[2.2.1]-heptane, tolylene diisocyanate, phenylene diisocyanate, and diphenylmethane diisocyanate.
[3] The molded product according to [1] or [2], in which the polyol compound (B) is one or more compounds selected from compounds represented by Formulae (I) to (IV),

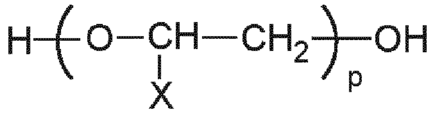

(I)

in Formula (I), p represents a numerical value of 4 to 100, X represents a hydrogen atom or a methyl group, and a plurality of X's existing together may be identical to or different from each other,

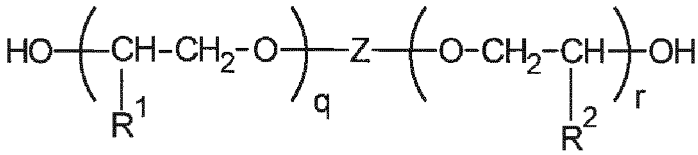

(II)

in Formula (II), q and r may be identical to or different from each other and each represent a numerical value of equal to or greater than 1, a sum of q and r represents a numerical value of 2 to 100, $R^1$ and $R^2$ may be identical to or different from each other and represent a hydrogen atom or a methyl group, each of a plurality of $R^1$'s or $R^2$'s existing together may be identical to or different from each other, and Z represents a substituted or unsubstituted divalent aromatic group or a divalent aliphatic group which may include a substituted or unsubstituted aromatic group having 1 to 20 carbon atoms,

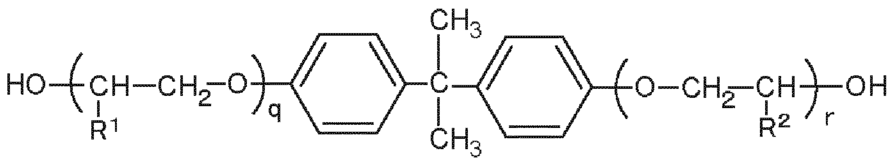

(III)

in Formula (III), q and r may be identical to or different from each other and each represent a numerical value of equal to or greater than 1, a sum of q and r represents a numerical value of 2 to 100, $R^1$ and $R^2$ may be identical to or different from each other and represent a hydrogen atom or a methyl group, each of a plurality of $R^1$'s or $R^2$'s existing together may be identical to or different from each other,

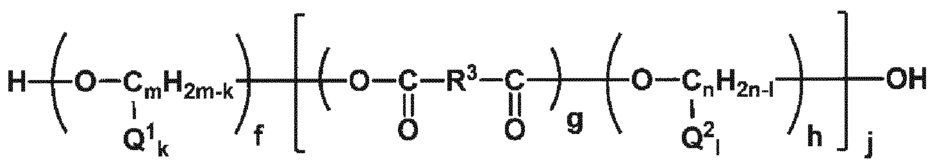

(IV)

in Formula (IV), m represents a numerical value of 1 to 20, k represents 0 to 2m, n represents a numerical value of 1 to 20, l represents 0 to 2n, f represents a numerical value of equal to or greater than 0, g represents a numerical value of equal to or greater than 1, h represents a numerical value of equal to or greater than 1, j represents a numerical value of equal to or greater than 1, $Q^1$ represents a hydrogen atom or an alkyl group having 1 to 6 carbon atoms, a plurality of $Q^1$'s existing together may be identical to or different from each other, $Q^2$ represents a hydrogen atom or an alkyl group having 1 to 6 carbon atoms, a plurality of $Q^2$'s existing together may be identical to or different from each other, $R^3$ represents a linear or branched alkylene group having 1 to 20 carbon atoms or a phenylene group which may have a linear or branched alkyl group having 1 to 10 carbon atoms as a substituent, and a plurality of $R^3$'s existing together may be identical to or different from each other.

[4] The molded product according to [3], in which the polyol compound (B) is a compound represented by Formula (I), (III), or (IV) .

[5] The molded product according to [3] or [4], in which the compound represented by Formula (I) is polyethylene glycol or polypropylene glycol.

[6] The molded product according to any one of [3] to [5], in which a number average molecular weight of the compound represented by Formula (I) is 200 to 4,000.

[7] The molded product according to any one of [3] to [5], in which a number average molecular weight of the compound represented by Formula (I) is 300 to 3,000.

[8] The molded product according to [3], in which a number average molecular weight of the compound represented

by Formula (II) is 400 to 2,000.

[9] The molded product according to [3] or [4], in which a number average molecular weight of the compound represented by Formula (III) is 400 to 2,000.

[10] The molded product according to [3] or [4], in which a number average molecular weight of the compound represented by Formula (IV) is 600 to 3,000.

[11] The molded product according to any one of [1] to [10], in which the active hydrogen compound (C) is one or more selected from the group consisting of a polythiol compound, and a thiol compound having a hydroxy group.

[12] The molded product according to any one of [1] to [11], in which the active hydrogen compound (C) is a trifunctional or higher functional active hydrogen compound.

[13] The molded product according to any one of [1] to [12], in which the active hydrogen compound (C) is one or more selected from the group consisting of pentaerythritol tetrakis(2-mercaptoacetate), pentaerythritol tetrakis(3-mercaptopropionate), 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 1,1,3,3-tetrakis(mercaptomethylthio) propane, and trimethylolpropane tris(3-mercaptopropionate).

[14] The molded product according to any one of [1] to [13], in which the photochromic compound (D) is represented by Formula (5),

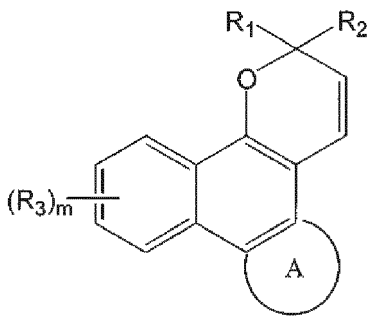

(5)

in the formula, $R_1$ and $R_2$ may be identical to or different from each other and independently represent

a hydrogen;
a linear or branched alkyl group having 1 to 12 carbon atoms;
a cycloalkyl group having 3 to 12 carbon atoms;
a substituted or unsubstituted aryl group having 6 to 24 carbon atoms or heteroaryl group having 4 to 24 carbon atoms having, as a substituent, at least one substituent selected from a halogen atom, a hydroxy group, a linear or branched alkyl group having 1 to 12 carbon atoms, a linear or branched alkoxy group having 1 to 12 carbon atoms, a linear or branched haloalkyl group having 1 to 12 carbon atoms which is substituted with at least one halogen atom, a linear or branched haloalkoxy group having 1 to 12 carbon atoms which is substituted with at least one halogen atom, a phenoxy group or a naphthoxy group which is substituted with at least one linear or branched alkyl group or alkoxy group having 1 to 12 carbon atoms, a linear or branched alkenyl group having 2 to 12 carbon atoms, a $-NH_2$ group, a -NHR group, a $-N(R)_2$ group where R is a linear or branched alkyl group having 1 to 6 carbon atoms, and in a case where two R's exist, the two R's may be identical to or different from each other, and a methacryloyl group or an acryloyl group; and
an aralkyl or heteroaralkyl group which group is a linear or branched alkyl group having 1 to 4 carbon atoms is substituted with the aryl group or the heteroaryl group,
$R_3$'s may be identical to or different from each other, and independently represent
a halogen atom;
a linear or branched alkyl group having 1 to 12 carbon atoms;
a cycloalkyl group having 3 to 12 carbon atoms;
a linear or branched alkoxy group having 1 to 12 carbon atoms;
a linear or branched haloalkyl group having 1 to 12 carbon atoms which is substituted with at least one halogen atom, a halocycloalkyl group having 3 to 12 carbon atoms which is substituted with at least one halogen atom, and a linear or branched haloalkoxy group having 1 to 12 carbon atoms which is substituted with at least one halogen atom;
a substituted or unsubstituted aryl group having 6 to 24 carbon atoms or heteroaryl group having 4 to 24 carbon atoms having as a substituent, at least one substituent selected from a halogen atom, a hydroxy group, a linear

or branched alkyl group having 1 to 12 carbon atoms, a linear or branched alkoxy group having 1 to 12 carbon atoms, a linear or branched haloalkyl group having 1 to 12 carbon atoms which is substituted with at least one halogen atom, a linear or branched haloalkoxy group having 1 to 12 carbon atoms which is substituted with at least one halogen atom, a phenoxy group or a naphthoxy group which is substituted with at least one linear or branched alkyl group or alkoxy group having 1 to 12 carbon atoms, a linear or branched alkenyl group having 2 to 12 carbon atoms, and an amino group;

an aralkyl or heteroaralkyl group, which group is a linear or branched alkyl group having 1 to 4 carbon atoms is substituted with the aryl group or the heteroaryl group;

a substituted or unsubstituted phenoxy or naphthoxy group having, as a substituent, at least one substituent selected from a linear or branched alkyl group or alkoxy group having 1 to 6 carbon atoms;

$-NH_2$, -NHR, $-CONH_2$, or -CONHR

wherein R is a linear or branched alkyl group having 1 to 6 carbon atoms) ; and

$-OCOR_8$ or $-COOR_8$ where $R_8$ is a linear or branched alkyl group having 1 to 6 carbon atoms, or a cycloalkyl group having 3 to 6 carbon atoms, or, in $R_1$ and $R_2$, a phenyl group substituted with at least one substituent of a substituted aryl or substituted heteroaryl group or an unsubstituted phenyl group,

m is an integer of 0 to 4,

A represents an annelated ring of Formula ($A_2$) or ($A_4$),

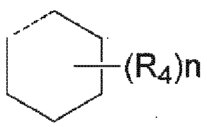

($A_2$)

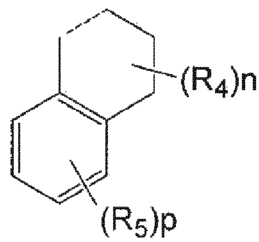

($A_4$)

in the annelated rings,

a dotted line represents a carbon $C_5$ carbon $C_6$ bond of a naphthopyran ring of Formula (5),

an $\alpha$ bond of an annelated ring ($A_4$) is able to be bonded to carbon $C_5$ or carbon $C_6$ of the naphthopyran ring of Formula (5),

$R_4$'s are identical to or different from each other, and independently represent

OH, a linear or branched alkyl group or alkoxy group having 1 to 6 carbon atoms, or two $R_4$'s form carbonyl (CO), and

$R_5$ represents

halogen;

a linear or branched alkyl group having 1 to 12 carbon atoms;

a linear or branched haloalkyl group which is substituted with at least one halogen atom and which has 1 to 6 carbon atoms;

a cycloalkyl group having 3 to 12 carbon atoms;

a linear or branched alkoxy group having 1 to 6 carbon atoms;

a substituted or unsubstituted phenyl or benzyl group having, as a substituent, in a case where the $R_1$ or $R_2$ group of Formula (5) independently corresponds to an aryl or heteroaryl group, at least one of the substituents described above in definition of the $R_1$ or $R_2$ group;

$-NH_2$ and -NHR

where R is a linear or branched alkyl group having 1 to 6 carbon atoms;

a substituted or unsubstituted phenoxy or naphthoxy group having, as a substituent, at least a linear or branched alkyl group or alkoxy group having 1 to 6 carbon atoms; and

a $-COR_9$, $-COOR_9$, or $-CONHR_9$ group where $R_9$ represents a linear or branched alkyl group having 1 to 6 carbon atoms, a cycloalkyl group having 3 to 6 carbon atoms, or a substituted or unsubstituted phenyl or benzyl group having, as a substituent, in a case where the $R_1$ or $R_2$ group of Formula (5) independently corresponds to an aryl or heteroaryl group, at least one of the substituents described above in the definition of the $R_1$ or $R_2$ group, and

in a case where A represents ($A_4$), n is an integer of 0 to 2, and p is an integer of 0 to 4, and in a case where A represents ($A_2$), n is an integer of 0 to 2.

[15] The molded product according to any one of [1] to [14], in which a functional group equivalent ratio (B/A) of the polyol compound (B) with respect to the polyisocyanate compound (A) is 0.02 to 0.6, and a functional group equivalent ratio (C/A) of the active hydrogen compound (C) with respect to the polyisocyanate compound (A) is 0.4 to 0.98.
[16] An optical material formed of the molded product according to any one of [1] to [15].
[17] A plastic lens formed of the molded product according to any one of [1] to [15].
[18] A plastic polarized lens including: a polarizing film; and a substrate layer formed of the molded product according to any one of [1] to [15] formed on at least one surface of the polarizing film.
[19] A polymerizable composition for an optical material, including: a polyisocyanate compound (A);
a polyol compound (B) which is represented by Formula (1), and which has a number average molecular weight of equal to or greater than 100

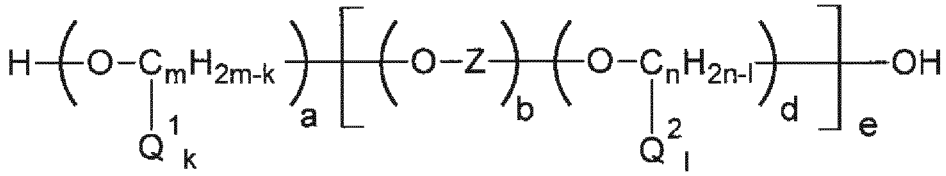

(1)

in Formula (1), m represents a numerical value of 1 to 20, k represents 0 to 2m, n represents a numerical value of 1 to 20, l represents 0 to 2n, a represents a numerical value of equal to or greater than 0, b represents a numerical value of equal to or greater than 0, d represents a numerical value of equal to or greater than 0, e represents a numerical value of equal to or greater than 1, $Q^1$ represents a hydrogen atom or an alkyl group having 1 to 6 carbon atoms, a plurality of $Q^1$'s existing together may be identical to or different from each other, $Q^2$ represents a hydrogen atom or an alkyl group having 1 to 6 carbon atoms, a plurality of $Q^2$'s existing together may be identical to or different from each other, Z represents a divalent organic group having 1 to 30 carbon atoms which may include an aromatic group, and a plurality of Z's existing together may be identical to or different from each other;
a bifunctional or higher functional active hydrogen compound (C) having at least one SH group; and a photochromic compound (D),
in which a molar ratio (NCO group / (OH group + SH group)) of NCO groups included in the polyisocyanate compound (A) with respect to a sum of OH groups and SH groups included in the active hydrogen compound (C) and the polyol compound (B)) is in a range of 1.1 to 1.6.
[20] A method of manufacturing a plastic lens, including: a step of mixing a polyisocyanate compound (A),
a polyol compound (B) which is represented by Formula (1), and which has a number average molecular weight of equal to or greater than 100

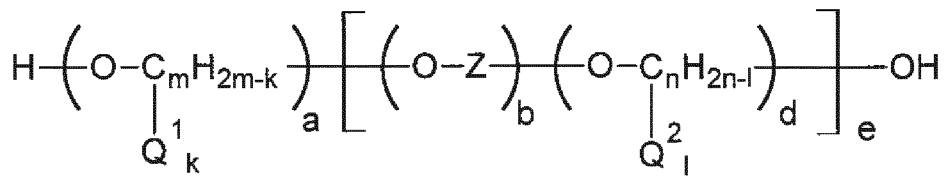

(1)

in Formula (1), m represents a numerical value of 1 to 20, k represents 0 to 2m, n represents a numerical value of 1 to 20, l represents 0 to 2n, a represents a numerical value of equal to or greater than 0, b represents a numerical value of equal to or greater than 0, d represents a numerical value of equal to or greater than 0, e represents a numerical value of equal to or greater than 1, $Q^1$ represents a hydrogen atom or an alkyl group having 1 to 6 carbon atoms, a plurality of $Q^1$'s existing together may be identical to or different from each other, $Q^2$ represents a hydrogen atom or an alkyl group having 1 to 6 carbon atoms, a plurality of $Q^2$'s existing together may be identical to or different from each other, Z represents a divalent organic group having 1 to 30 carbon atoms which may include an aromatic group, and a plurality of Z's existing together may be identical to or different from each other,
a bifunctional or higher functional active hydrogen compound (C) having at least one SH group, and
(D) a photochromic compound, such that a molar ratio (NCO group / (OH group + SH group)) of NCO groups included in the polyisocyanate compound (A) with respect to a sum of OH groups and SH groups included in the active hydrogen compound (C) and the polyol compound (B)) is in a range of 1.1 to 1.6, to prepare a polymerizable composition for an optical material; and
a step of casting and polymerizing the polymerizable composition for an optical material in a mold to form a lens substrate.
[21] A method of manufacturing a plastic polarized lens, including: a step of mixing a polyisocyanate compound (A),

a polyol compound (B) which is represented by Formula (1), and which has a number average molecular weight of equal to or greater than 100

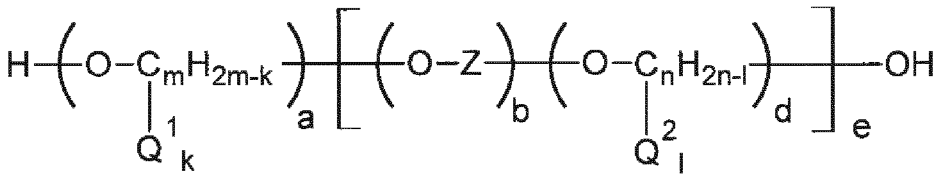 (1)

in Formula (1), m represents a numerical value of 1 to 20, k represents 0 to 2m, n represents a numerical value of 1 to 20, l represents 0 to 2n, a represents a numerical value of equal to or greater than 0, b represents a numerical value of equal to or greater than 0, d represents a numerical value of equal to or greater than 0, e represents a numerical value of equal to or greater than 1, $Q^1$ represents a hydrogen atom or an alkyl group having 1 to 6 carbon atoms, a plurality of $Q^1$'s existing together may be identical to or different from each other, $Q^2$ represents a hydrogen atom or an alkyl group having 1 to 6 carbon atoms, a plurality of $Q^2$'s existing together may be identical to or different from each other, Z represents a divalent organic group having 1 to 30 carbon atoms which may include an aromatic group, and a plurality of Z's existing together may be identical to or different from each other,

a bifunctional or higher functional active hydrogen compound (C) having at least one SH group, and

(D) a photochromic compound, such that a molar ratio (NCO group / (OH group + SH group)) of NCO groups included in the polyisocyanate compound (A) with respect to a sum of OH groups and SH groups included in the active hydrogen compound (C) and the polyol compound (B)) is in a range of 1.1 to 1.6, to prepare a polymerizable composition for an optical material;

a step of fixing a polarizing film to a lens casting mold in a state of being separated from a mold;

a step of injecting the polymerizable composition for an optical material to at least one of cavities formed between the polarizing film and the mold; and

a step of polymerizing and curing the polymerizable composition for an optical material and laminating a substrate layer on at least one surface of the polarizing film.

ADVANTAGEOUS EFFECTS OF INVENTION

According to the molded product of the present invention, deterioration of the photochromic performance over time is suppressed, a photochromic performance can be exhibited in a stable manner, and thus it is possible to provide a polyurethane-based optical material or a polythiourethane-based optical material including a photochromic compound from the molded product.

According to the polymerizable composition for an optical material of the present invention, the molded product can be suitably obtained.

DESCRIPTION OF EMBODIMENTS

The molded product of the present invention can be obtained by polymerizing and curing a polymerizable composition including the compounds of (A) to (D) below, and the concentration of SH groups by the IR analysis method is less than 1.0 wt%.

A polyisocyanate compound (A)

A polyol compound (B) which is represented by Formula (1), and which has a number average molecular weight of equal to or greater than 100

A bifunctional or higher functional active hydrogen compound (C) having at least one SH group, and

A photochromic compound (D)

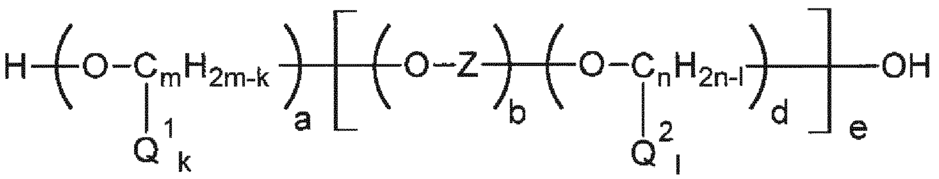 (1)

In Formula (1), m represents a numerical value of 1 to 20, k represents 0 to 2m, n represents a numerical value of 1 to 20, l represents 0 to 2n, a represents a numerical value of equal to or greater than 0, b represents a numerical

value of equal to or greater than 0, d represents a numerical value of equal to or greater than 0, and e represents a numerical value of equal to or greater than 1. $Q^1$ represents a hydrogen atom or an alkyl group having 1 to 6 carbon atoms, a plurality of $Q^1$'s existing together may be identical to or different from each other, $Q^2$ represents a hydrogen atom or an alkyl group having 1 to 6 carbon atoms, a plurality of $Q^2$'s existing together may be identical to or different from each other, Z represents a divalent organic group having 1 to 30 carbon atoms which may include an aromatic group, and a plurality of Z's existing together may be identical to or different from each other.

According to the molded product of the present invention, deterioration of the photochromic performance over time is suppressed, and a photochromic performance can be exhibited in a stable manner.

The molded product of the present invention can be obtained by using the polymerizable composition for an optical material of the present embodiment. First, the polymerizable composition for an optical material is described based on the following embodiment.

The polymerizable composition for an optical material of the present embodiment includes
the polyisocyanate compound (A),
the polyol compound (B) which is represented by Formula (1) and which has a number average molecular weight of equal to or greater than 100,
the bifunctional or higher functional active hydrogen compound (C) having at least one SH group; and
a photochromic compound (D).

A molar ratio (NCO group / (OH group + SH group)) of NCO groups included in the polyisocyanate compound (A) with respect to a sum of OH groups and SH groups included in the active hydrogen compound (C) and the polyol compound (B)) is in a range of 1.1 to 1.6.

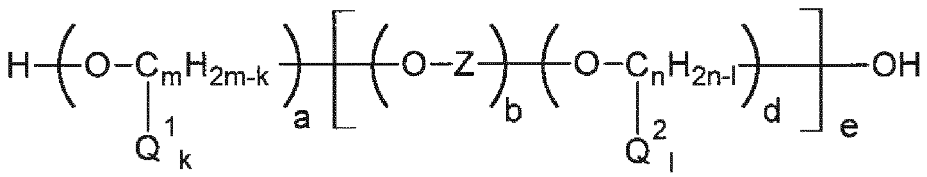

(1)

In Formula (1), m represents a numerical value of 1 to 20, k represents 0 to 2m, n represents a numerical value of 1 to 20, l represents 0 to 2n, a represents a numerical value of equal to or greater than 0, b represents equal to or greater than 0, d represents a numerical value of equal to or greater than 0, and e represents a numerical value of equal to or greater than 1. $Q^1$ represents a hydrogen atom or an alkyl group having 1 to 6 carbon atoms, a plurality of $Q^1$'s existing together may be identical to or different from each other, $Q^2$ represents a hydrogen atom or an alkyl group having 1 to 6 carbon atoms, a plurality of $Q^2$'s existing together may be identical to or different from each other, Z represents a divalent organic group having 1 to 30 carbon atoms which may include an aromatic group, and a plurality of Z's existing together may be identical to or different from each other.

It is assumed that the polymerizable composition for an optical material according to the present embodiment includes the compounds (A) to (C), and effectively suppress a failure of an isomerization reaction of the photochromic compound (D) in the polymer matrix of the composition. That is, it is considered that, a moderate space is formed such that isomerization reaction of photochromic compound is easily performed in a matrix molecular chain by adding the compound (B), which is an essential component of the present invention, to a resin in the related art used for spectacle lenses including the compounds (A) and (C), and, as a result, a satisfactory photochromic performance is realized. With this configuration, it is possible to provide a well-balanced optical material that exhibits a high photochromic performance and has excellent mechanical properties that are characteristics of a poly(thio)urethane-based resin.

According to the polymerizable composition for an optical material of the present invention, it is possible to provide a molded product in which the deterioration of the photochromic compound over time is suppressed, and a photochromic performance is exhibited in a stable manner.

Hereinafter, respective components are described.

Polyisocyanate compound (A)

Examples of the polyisocyanate compound (A) include an aliphatic polyisocyanate compound such as hexamethylene diisocyanate, pentamethylene diisocyanate, 2,2,4-trimethylhexane diisocyanate, 2,4,4-trimethylhexamethylene diisocyanate, lysine diisocyanatomethyl ester, lysine triisocyanate, m-xylylene diisocyanate, o-xylylene diisocyanate, p-xylylene diisocyanate, xylylene diisocyanate, $\alpha,\alpha,\alpha',\alpha'$-tetramethylxylylene diisocyanate, bis(isocyanatomethyl) naphthalene, 1,3,5-tris(isocyanatomethyl) benzene, bis(isocyanatomethyl) sulfide, bis(isocyanatoethyl) sulfide, bis(isocyanatomethyl) disulfide, bis(isocyanatoethyl) disulfide, bis(isocyanatomethylthio) methane, bis(isocyanatoethylthio) methane, bis(isocyanatoethylthio) ethane, and bis(isocyanatomethylthio) ethane;

an alicyclic polyisocyanate compound such as isophorone diisocyanate, bis(isocyanatomethyl) cyclohexane, 1,2-bis(isocyanatomethyl)cyclohexane, 1,3-bis(isocyanatomethyl) cyclohexane, 1,4-bis(isocyanatomethyl)cyclohexane, dicyclohexylmethane diisocyanate, dicyclohexylmethane-4,4'-diisocyanate, dicyclohexylmethane-2,4'-diisocyanate, cyclohexane diisocyanate, methyl cyclohexane diisocyanate, dicyclohexyl dimethyl methane isocyanate, 2,5-bis(isocyanatomethyl)bicyclo-[2.2.1]-heptane, 2,6-bis(isocyanatomethyl)bicyclo-[2.2.1]-heptane, 3,8-bis(isocyanatomethyl)tricyclodecane, 3,9-bis(isocyanatomethyl)tricyclodecane, 4,8-bis(isocyanatomethyl)tricyclodecane, and 4,9-bis(isocyanatomethyl)tricyclodecane;

an aromatic polyisocyanate compound such as diphenyl sulfide-4,4-diisocyanate, tolylene diisocyanate, phenylene diisocyanate, 1,3-phenylene diisocyanate, 1,4-phenylene diisocyanate, and diphenylmethane diisocyanate; and

a heterocyclic polyisocyanate compound such as 2,5-diisocyanatothiophene, 2,5-bis(isocyanatomethyl)thiophene, 2,5-diisocyanatotetrahydrothiophene, 2,5-bis(isocyanatomethyl) tetrahydrothiophene, 3,4-bis(isocyanatomethyl) tetrahydrothiophene, 2,5-diisocyanato-1,4-dithiane, 2,5-bis(isocyanatomethyl)-1,4-dithiane, 4,5-diisocyanato-1,3-dithiolane, and 4,5-bis(isocyanatomethyl)-1,3-dithiolane. As the polyisocyanate compound (A), at least one selected from these can be used.

Examples of the polyisocyanate compound (A) include a modified product and/or a mixture with a modified product, in addition to monomers, and examples of the modified products of isocyanate include a multimer, a biuret-modified product, an allophanate-modified product, an oxadiazinetrione-modified product, and a polyol-modified product. Examples of the multimer include a dimer such as uretdione, uretimine, and carbodiimide, and a trimer or higher multimer such as isocyanurate and iminooxadiane dione.

The polyisocyanate compound (A) is preferably hexamethylene diisocyanate, pentamethylene diisocyanate, m-xylylene diisocyanate, isophorone diisocyanate, bis(isocyanatomethyl) cyclohexane, dicyclohexylmethane diisocyanate, 2,5-bis(isocyanatomethyl) bicyclo-[2.2.1]-heptane, 2,6-bis(isocyanatomethyl) bicyclo-[2.2.1]-heptane, tolylene diisocyanate, phenylene diisocyanate, and diphenylmethane diisocyanate, and

more preferably m-xylylene diisocyanate, isophorone diisocyanate, bis(isocyanatomethyl) cyclohexane, dicyclohexylmethane diisocyanate, 2,5-bis(isocyanatomethyl) bicyclo-[2.2.1]-heptane, and 2,6-bis(isocyanatomethyl) bicyclo-[2.2.1]-heptane. These polyisocyanate compounds may be used singly or two or more kinds may be used in a mixture.

Polyol compound (B)

According to the present embodiment, as the polyol compound (B), one or more compounds selected from the compound which is represented by Formula (1) and which has a number average molecular weight of equal to or greater than 100 can be used.

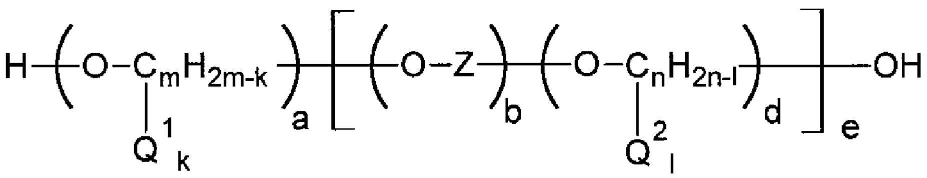

(1)

A lower limit of the number average molecular weight of the polyol compound (B) is equal to or greater than 100, preferably equal to or greater than 200, more preferably equal to or greater than 300, and even more preferably equal to or greater than 400, and an upper limit thereof is equal to or less than 4,000, more preferably equal to or less than 3,000, and even more preferably equal to or less than 2,000. The upper limit and the lower limit may be appropriately combined.

In Formula (1), m represents numerical values of 1 to 20, preferably 1 to 10, and even more preferably 2 to 5. n represents numerical values of 1 to 20, preferably 1 to 10, and even more preferably 2 to 5.

a represents numerical values of equal to or greater than 0, preferably 0 to 100, and even more preferably 0 to 25.

b represents numerical values of equal to or greater than 0, preferably 0 to 200, and even more preferably 0 to 100.

d represents numerical values of equal to or greater than 0, preferably 1 to 200, and even more preferably 1 to 100.

e represents numerical values of equal to or greater than 1, preferably 1 to 200, and even more preferably 1 to 100.

k represents 0 to 2m, and l represents 0 to 2n.

$Q^1$ represents a hydrogen atom or an alkyl group having 1 to 6 carbon atoms and is preferably a hydrogen atom or an alkyl group having 1 to 3 carbon atoms. A plurality of $Q^1$'s existing together may be identical to or different from each other.

$Q^2$ represents a hydrogen atom or an alkyl group having 1 to 6 carbon atoms and is preferably a hydrogen atom or an alkyl group having 1 to 3 carbon atoms. A plurality of $Q^2$'s existing together may be identical to or different from each other.

Z represents a divalent organic group having 1 to 30 carbon atoms which may include an aromatic group and preferably represents a divalent organic group having 1 to 20 carbon atoms which may include an aromatic group. A plurality of Z's existing together may be identical to or different from each other.

Examples of the "divalent organic group having 1 to 30 carbon atoms which may include an aromatic group" include a substituted or unsubstituted linear or cyclic aliphatic group having 1 to 30 carbon atoms such as a methylene group, an ethylene group, a trimethylene group, a tetramethylene group, a pentamethylene group, a cyclopentylene group, a hexamethylene group, a cyclohexylene group, a heptamethylene group, a octamethylene group, a nonamethylene group, a decamethylene group, an undecamethylene group, a dodecamethylene group, a tridecamethylene group, a tetradecamethylene group, and a pentadecamethylene;

a substituted or unsubstituted aromatic group having 6 to 30 carbon atoms such as a phenylene group, a naphthylene group, an anthracene group, a diphenylmethane group, a 1,1-diphenylethane group, a 1,1,1-methyldiphenylethane group, a diphenylpropane group, a diphenyl ether group, a diphenyl sulfide group, a diphenyl sulfoxide group, a diphenylsulfone group, a diphenyl ketone group, a phenyl benzoate group, a biphenyl group, a stilbene group, a diazobenzene group, and an aniline benzylidene group;

a substituted or unsubstituted aromatic-aliphatic group having 6 to 30 carbon atoms such as a $-C_6H_4-CH_2-$ group, a $-CH_2-C_6H_4-CH_2-$ group, a $-CH_2-C_6H_3(Cl)-CH_2-$ group, a $-C_{10}H_6-CH_2-$ group, a $-CH_2-C_{10}H_6-CH_2-$ group, and a $-CH_2CH_2-C_6H_4-CH_2CH_2-$ group; or

a carbonyl group-containing compound having 1 to 30 carbon atoms such as $-C(O)-R^7-C(O)-$ where $R^7$ represents a substituted or unsubstituted linear or branched alkylene group having 1 to 20 carbon atoms or a substituted or unsubstituted aromatic group having 6 to 20 carbon atoms and $-C(O)-R^8-$ where $R^8$ represents a substituted or unsubstituted linear or branched alkylene group having 1 to 20 carbon atoms;

These organic groups may be substituted with a linear or branched alkyl group having 1 to 10 carbon atoms or a linear or branched alkoxy group having 1 to 10 carbon atoms.

In order to provide a satisfactory color developability performance to a polymer (molded product) obtainable from the polymerizable composition according to the present embodiment, it is required to set the molecular weight of the polyol compound (B) to be added, to an appropriate range.

According to the present embodiment, one or more compounds selected from the compounds represented by Formulae (I) to (IV) may be used as the polyol compound (B).

(Compound represented by Formula (I))

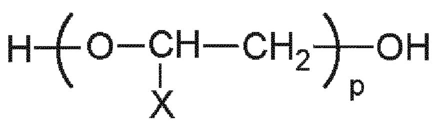

(I)

In Formula (I), p represents numerical values of 4 to 100 and preferably represents numerical values of 15 to 50. X represents a hydrogen atom or a methyl group, and a plurality of X's existing together may be identical to or different from each other. X is preferably a methyl group.

Examples of the compound represented by Formula (I) include polyethylene glycol and polypropylene glycol, the compound may include a low molecular weight oligomer such as ethylene glycol, diethylene glycol, and triethylene glycol, and the compound may be used singly or may be used as a mixture of two or more kinds thereof.

A lower limit of the number average molecular weight of the compound represented by Formula (I) is equal to or greater than 100, preferably equal to or greater than 200, more preferably equal to or greater than 300, and even more preferably equal to or greater than 400, and an upper limit thereof is equal to or less than 4,000, more preferably equal to or less than 3,000, and even more preferably equal to or less than 2,000. The upper limit and the lower limit may be appropriately combined.

In a case where the number average molecular weight of the compound represented by Formula (I) is in the above range, a photochromic performance can be effectively exhibited without deteriorating the excellent characteristics such as the mechanical strength of a poly(thio)urethane resin.

In a case where the compound represented by Formula (I) is polyethylene glycol, the number average molecular weight is 400 to 2,000, a color developability performance is further improved, and cloudiness of a polymer is further suppressed.

In a case where the compound represented by Formula (I) is polypropylene glycol, the number average molecular weight is 400 to 1,000, a color developability performance is further improved, and cloudiness of a polymer is further suppressed.

In a case of polypropylene glycol, higher heat resistance and stiffness compared with a polymer obtainable

from polyethylene glycol are exhibited. Accordingly, polypropylene glycol may be more preferable than polyethylene glycol for use in various environments and conditions such as spectacle lenses, in some cases.

(Compound represented by Formula (II))

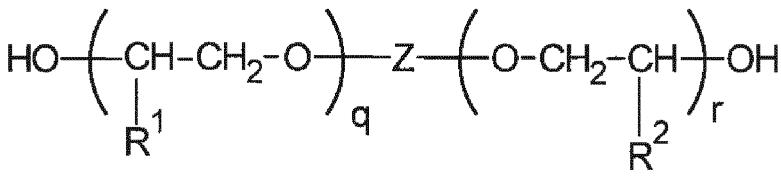

(II)

In Formula (II), q and r may be identical to or different from each other and each represent a numerical value of equal to or greater than 1, and preferably represent a numerical value of 6 to 25. With respect to q and r, a sum of q and r is a numerical value of 2 to 100 and preferably takes a numerical value such that a numerical value of 12 to 50 is satisfied.

$R^1$ and $R^2$ may be identical to or different from each other and represent a hydrogen atom or a methyl group, and each of a plurality of $R^1$'s or $R^2$'s existing together may be identical to or different from each other.

Z represents a divalent aliphatic group which may include a substituted or unsubstituted divalent aromatic group, a substituted or unsubstituted aromatic group having 1 to 20 carbon atoms. Z does not include $-Ph-C(CH_3)_2-Ph-$ (Ph: phenylene group).

Examples of the substituted or unsubstituted divalent aromatic group include a phenylene group, a naphthylene group, an anthracene group, a diphenylmethane group, a 1,1-diphenylethane group, a 1,1,1-methyldiphenylethane group, a 1,3-diphenylpropane group, a 1,2-diphenylpropane group, a diphenyl ether group, a diphenyl sulfide group, a diphenyl sulfoxide group, a diphenylsulfone group, a diphenyl ketone group, a phenyl benzoate group, a biphenyl group, a stilbene group, a diazobenzene group, an aniline benzylidene group, and derivatives thereof.

Examples of the divalent aliphatic group that may include a substituted or unsubstituted aromatic group having 1 to 20 carbon atoms include a substituted or unsubstituted alkylene group having 1 to 20 carbon atoms, a divalent group derived from a bisalkoxy aromatic compound having 1 to 20 carbon atoms.

Examples of the substituted or unsubstituted alkylene group having 1 to 20 carbon atoms include a butylene group, a pentylene group, and a nonylene group.

Examples of the bisalkoxy aromatic compound having 1 to 20 carbon atoms include 1,4-bis(hydroxyethoxy)benzene, (1,3-bis(m-hydroxyethoxy)benzene, and 2,2-[(1,1-biphenyl)-4,4-diylbis(oxy)] bisethanol.

Examples of the substituents of the divalent aromatic group and the divalent aliphatic group include an alkyl group having 1 to 10 carbon atoms and an alkoxy group having 1 to 10 carbon atoms.

According to the present embodiment, Z is preferably a phenylene group, a naphthylene group, and a biphenylene group.

Examples of the compound represented by Formula (II) include a polypropylene glycol adduct or a polyethylene glycol adduct such as 1,4-butanediol, 3-methyl-1,5-pentanediol, 1,9-nonanediol, 1,4-bis(hydroxyethoxy)benzene, 1,3-bis(m-hydroxyethoxy)benzene, and 2,2-[(1,1-biphenyl)-4,4-diylbis(oxy)]bisethanol, and these may be used singly or as a mixture of two or more kinds thereof.

The compound represented by Formula (II) does not include the compound represented by Formula (III).

The lower limit of the number average molecular weight of the compound represented by Formula (II) is equal to or greater than 200, preferably equal to or greater than 300, more preferably equal to or greater than 400, and even more preferably equal to or greater than 500, and an upper limit thereof is equal to or less than 4,000, preferably equal to or less than 3,000, more preferably equal to or less than 2,000, and even more preferably equal to or less than 1,000. The upper limit and the lower limit may be appropriately combined.

In a case where the number average molecular weight of the compound represented by Formula (II) is in the above range, a photochromic performance can be effectively exhibited without deteriorating the excellent characteristics such as the mechanical strength of a poly(thio)urethane resin.

-(Compound represented by Formula (III))-

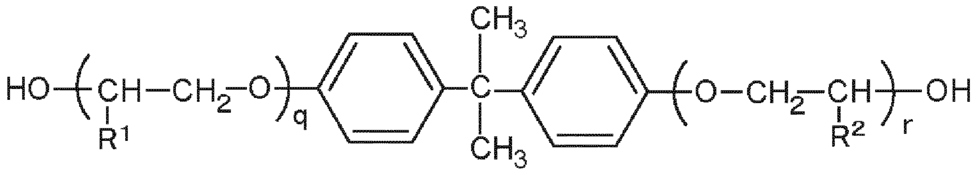

(III)

In Formula (III), q and r may be identical to or different from each other and each represent a numerical value of equal to or greater than 1, and preferably represent a numerical value of 6 to 25. With respect to q and r, a sum of q and r is a numerical value of 2 to 100 and preferably takes a numerical value such that a numerical value of 12 to 50 is satisfied.

$R^1$ and $R^2$ may be identical to or different from each other and represent a hydrogen atom or a methyl group, and each of a plurality of $R^1$'s or $R^2$'s existing together may be identical to or different from each other.

Examples of the compound represented by Formula (III) include a polyethylene glycol adduct of bisphenol A or a polypropylene glycol adduct of bisphenol A, and these may be used singly or as a mixture of two or more kinds thereof.

The lower limit of the number average molecular weight of the compound represented by Formula (III) is equal to or greater than 316, preferably equal to or greater than 400, and more preferably equal to or greater than 500, and an upper limit thereof is equal to or less than 4,000, preferably equal to or less than 3,000, more preferably equal to or less than 2,000, and even more preferably equal to or less than 1,500. The upper limit and the lower limit may be appropriately combined.

In a case where the number average molecular weight of the compound represented by Formula (III) is in the above range, a photochromic performance can be effectively exhibited without deteriorating the excellent characteristics such as the mechanical strength of a poly(thio)urethane resin.

In a case where the compound represented by Formula (III) is a polyethylene glycol adduct of bisphenol A or a polypropylene glycol adduct of bisphenol A, the number average molecular weight is 400 to 1,000, a color developability performance is further improved, and cloudiness of a polymer is further suppressed.

-(Compound represented by Formula (IV))-

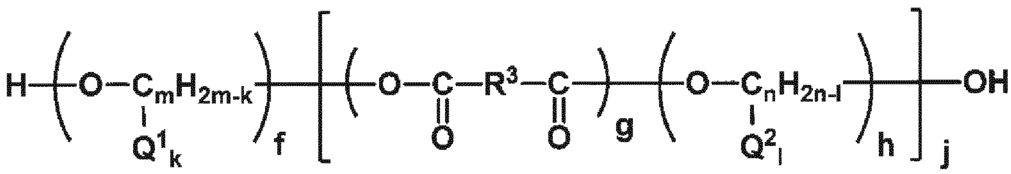

(IV)

In Formula (IV), m represents numerical values of 1 to 20, preferably 1 to 10, and even more preferably 2 to 5.
n represents numerical values of 1 to 20, preferably 1 to 10, and even more preferably 2 to 5.
f represents numerical values of equal to or greater than 0, preferably 0 to 100, and even more preferably 0 to 25.
g represents numerical values of equal to or greater than 1, preferably 1 to 200, and even more preferably 1 to 100.
h represents numerical values of equal to or greater than 1, preferably 1 to 200, and even more preferably 1 to 100.
j represents numerical values of equal to or greater than 1, preferably 1 to 200, and even more preferably 1 to 100.
k represents 0 to 2m, and l represents 0 to 2n.

$Q^1$ represents a hydrogen atom or an alkyl group having 1 to 6 carbon atoms and is preferably a hydrogen atom or an alkyl group having 1 to 3 carbon atoms. A plurality of $Q^1$'s existing together may be identical to or different from each other.

$Q^2$ represents a hydrogen atom or an alkyl group having 1 to 6 carbon atoms and is preferably a hydrogen atom or an alkyl group having 1 to 3 carbon atoms. A plurality of $Q^2$'s existing together may be identical to or different from each other.

$R^3$ represents a linear or branched alkylene group having 1 to 20 carbon atoms or a phenylene group which may have a linear or branched alkyl group having 1 to 10 carbon atoms as a substituent. A plurality of $R^3$'s existing together may be identical to or different from each other.

Examples of the compound represented by Formula (IV) include a polyester compound formed of a diol compound and dicarboxylic acid.

A diol compound forming a polyester compound is not limited, but an aliphatic diol having 2 to 12 carbon atoms in a main chain is suitably used, and examples thereof include ethylene glycol, propylene glycol, 1,4-butanediol, 3-methyl-1,5-pentanediol, and 1,9-nonanediol.

Dicarboxylic acid forming a polyester compound is not limited, but aliphatic dicarboxylic acid or aromatic dicarboxylic acid having 2 to 12 carbon atoms in a main chain is suitably used, and examples thereof include succinic acid, adipic acid, sebacic acid, isophthalic acid, and terephthalic acid.

As the polyester compound, one or more of these diol compounds and one or more of these dicarboxylic acids can be appropriately used in combination.

A polyester compound obtainable by performing ring-opening polymerization on lactone can also be used in the present invention. Examples of a lactone compound include α-acetolactone, β-propiolactone, γ-butyrolactone, and δ-valerolactone.

The lower limit of the number average molecular weight of the compound represented by Formula (IV) is equal to or greater than 600, preferably equal to or greater than 800, more preferably equal to or greater than 1,000, and an upper limit thereof is equal to or less than 4,000, more preferably equal to or less than 3,000, and even more preferably equal to or less than 2,000. The upper limit and the lower limit may be appropriately combined.

In a case where the number average molecular weight of the compound represented by Formula (IV) is in the above range, a photochromic performance can be effectively exhibited without deteriorating the excellent characteristics such as the mechanical strength of a poly(thio)urethane resin.

In a case where the compound represented by Formula (IV) is a polyester compound obtainable by reacting an equimolar mixture of adipic acid and isophthalic acid to 3-methyl-1,5-pentanediol in an equimolar amount, the number average molecular weight is 1,000 to 2,000, a color developability performance is further improved, and cloudiness of a polymer is further suppressed.

In a case where the polyol compound (B) formed of the compound is used, a photochromic performance can be effectively exhibited.

According to the present embodiment, as the polyol compound (B), one or more compounds selected from the compound represented by Formula (I) to the compound represented by Formula (IV) can be used. In view of the above effects, the compounds represented by Formula (I), (III), or (IV) can be preferably used.

According to the present embodiment, the polyol compound (B) can be used in the range of 0.3 times by weight to 6 times by weight with respect to the weight of the bifunctional or higher functional active hydrogen compound (C). According to the present embodiment, the compound is used in the above range so as to exhibit a resin performance needed according to the use while a high photochromic performance is maintained. The content is preferably in the range of 0.7 times by weight to 5 times by weight.

In a case where the times by weight of the polyol compound (B) with respect to the active hydrogen compound (C) is in the above range, a high light control performance, that is, the high color developability concentration and a fast density change can be suitably exhibited. Since a crosslinking density is within the optimum range, an optical material having excellent stiffness, excellent surface hardness, and excellent heat resistance can be obtained.

Bifunctional or higher functional active hydrogen compound (C) having at least one SH group

The bifunctional or higher functional active hydrogen compound (C) having at least one SH group (hereinafter, simply referred to as the "active hydrogen compound (C)") is not limited, but examples thereof include a polythiol compound, and a thiol compound having a hydroxy group. These can be appropriately used in combination. With respect to the active hydrogen compound (C), a molar ratio (SH/ (SH+OH)) of an SH group with respect to a sum of SH groups and OH groups 0.01 to 1.0, preferably 0.1 to 1.0, and even more preferably 0.3 to 1.0.

Examples of the polyol compound include aliphatic polyol such as ethylene glycol, diethylene glycol, propylene glycol, dipropylene glycol, tripropylene glycol, butylene glycol, neopentyl glycol, glycerin, trimethylol ethane, trimethylolpropane, ditrimethylolpropane, butanetriol, 1,2-methyl glucoside, pentaerythritol, dipentaerythritol, tripentaerythritol, sorbitol, erythritol, threitol, ribitol, arabinitol, xylitol, allitol, mannitole, dolcitol, iditol, glycol, inositol, hexane triol, triglycerol, diglylcerol, triethylene glycol, polyethylene glycol, tris(2-hydroxyethyl) isocyanurate, cyclobutanediol, cyclopentanediol, cyclohexane diol, cycloheptanediol, cyclooctanediol, cyclohexane dimethanol, hydroxypropylcyclohexanol, tricyclo[5.2.1.$0^{2,6}$]decane-dimethanol, bicyclo[4.3.0]-nonanediol, dicyclohexanediol, tricyclo[5.3.1.1]dodecanediol, bicyclo[4.3.0]nonanedimethanol, tricyclo[5.3.1.1]dodecane-diethanol, hydroxypropyl tricyclo[5.3.1.1]dodecanol, spiro[3.4]octanediol, butyl cyclohexane diol, 1,1'-bicyclohexylidene diol, cyclohexane triol, maltitol, and lactose;

aromatic polyol such as dihydroxynaphthalene, trihydroxynaphthalene, tetrahydroxynaphthalene, dihydroxybenzene, benzene triol, biphenyltetraol, pyrogallol, (hydroxynaphthyl) pyrogallol, trihydroxy phenanthrene, bisphenol A, bisphenol F, xylylene glycol, di(2-hydroxyethoxy) benzene, bisphenol A-bis-(2-hydroxyethyl ether), tetrabrom bisphenol A, and tetrabromobisphenol A-bis-(2-hydroxyethyl ether);

halogenated polyol such as dibromoneopentyl glycol; and

polymer polyol such as an epoxy resin. According to the present embodiment, at least one selected from these can be used in combination.

Other examples of the polyol compound also include a condensation reaction product of the above polyol and an organic acid such as oxalic acid, glutamic acid, adipic acid, acetic acid, propionic acid, cyclohexane carboxylic acid, β-oxocyclohexane propionic acid, dimer acid, phthalic acid, isophthalic acid, salicylic acid, 3-bromopropionic acid, 2-bromoglycol, dicarboxycyclohexane, pyromellitic acid, butanetetracarboxylic acid, and bromophthalic acid;
an addition reaction product of the polyol and alkylene oxide such as ethylene oxide and propylene oxide;
an addition reaction product of alkylene polyamine and alkylene oxide such as ethylene oxide and propylene oxide;
bis-[4-(hydroxyethoxy)phenyl]sulfide, bis-[4-(2-hydroxypropoxy)phenyl]sulfide, bis-[4-(2,3-dihydroxypropoxy)phenyl]sulfide, bis-[4-(4-hydroxycyclohexyloxy)phenyl]sulfide, bis-[2-methyl-4-(hydroxyethoxy)-6-butylphenyl]sulfide, and a compound obtainable by adding ethylene oxide and/or propylene oxide having equal to or less than three molecules in average per hydroxyl group to these compounds;
sulfur atom-containing polyol such as di-(2-hydroxyethyl) sulfide, 1,2-bis-(2-hydroxyethylmercapto)ethane, bis(2-hydroxyethyl)disulfide, 1,4-dithiane-2,5-diol,

Examples of the polythiol compound include an aliphatic polythiol compound such as methanedithiol, 1,2-ethanedithiol, 1,2,3-propanetrithiol, 1,2-cyclohexanedithiol, bis(2-mercaptoethyl)ether, tetrakis(mercaptomethyl)methane, diethylene glycol bis(2-mercaptoacetate), diethylene glycol bis(3-mercaptopropionate), ethylene glycol bis(2-mercaptoacetate), ethylene glycol bis(3-mercaptopropionate), trimethylolpropane tris(2-mercaptoacetate), trimethylolpropane tris(3-mercaptopropionate), trimethylol ethane tris(2-mercaptoacetate), trimethylol ethane tris(3-mercaptopropionate), pentaerythritol tetrakis(2-mercaptoacetate), pentaerythritol tetrakis(3-mercaptopropionate), bis(mercaptomethyl) sulfide, bis(mercaptomethyl)disulfide, bis(mercaptoethyl) sulfide, bis(mercaptoethyl)disulfide, bis(mercaptopropyl)sulfide, bis(mercaptomethylthio)methane, bis(2-mercaptoethylthio)methane, bis(3-mercaptopropylthio)methane, 1,2-bis(mercaptomethylthio) ethane, 1,2-bis(2-mercaptoethylthio)ethane, 1,2-bis(3-mercaptopropylthio)ethane, 1,2,3-tris(mercaptomethylthio) propane, 1,2,3-tris(2-mercaptoethylthio) propane, 1,2,3-tris(3-mercaptopropylthio) propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl)sulfide, 2,5-dimercaptomethyl-1,4-dithiane, 2,5-dimercapto-1,4-dithiane, 2,5-dimercaptomethyl-2,5-dimethyl-1,4-dithiane, an ester of these thioglycolic acid and mercaptopropionic acid, hydroxymethyl sulfide bis(2-mercaptoacetate), hydroxymethyl sulfide bis(3-mercaptopropionate), hydroxyethyl sulfide bis(2-mercaptoacetate), hydroxyethyl sulfide bis(3-mercaptopropionate), hydroxymethyl disulfide bis(2-mercaptoacetate), hydroxymethyl disulfide bis(3-mercaptopropionate), hydroxyethyl disulfide bis(2-mercaptoacetate), hydroxyethyl disulfide bis(3-mercaptopropinate), 2-mercaptoethyl ether bis(2-mercaptoacetate), 2-mercaptoethyl ether bis(3-mercaptopropionate), thiodiglycolic acid bis(2-mercaptoethyl ester), thiodipropionic acid bis(2-mercaptoethyl ester), dithiodiglycolic acid bis(2-mercaptoethyl ester), dithiodipropionic acid bis(2-mercaptoethyl ester), 1,1,3,3-tetrakis(mercaptomethylthio)propane, 1,1,2,2-tetrakis(mercaptomethylthio)ethane, 4,6-bis(mercaptomethylthio)-1,3-dithiane, tris(mercaptomethylthio)methane, and tris(mercaptoethylthio) methane;
an aromatic polythiol compound such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,2-bis(mercaptoethyl)benzene, 1,3-bis(mercaptoethyl)benzene, 1,4-bis(mercaptoethyl)benzene, 1,3,5-trimercaptobenzene, 1,3,5-tris(mercaptomethyl)benzene, 1,3,5-tris(mercaptomethyleneoxy)benzene, 1,3,5-tris(mercaptoethyleneoxy)benzene, 2,5-toluenedithiol, 3,4-toluenedithiol, 1,5-naphthalene dithiol, and 2,6-naphthalenedithiol;
a heterocyclic polythiol compound such as 2-methylamino-4,6-dithiol-sym-triazine, 3,4-thiophenedithiol, bismuthiol, 4,6-bis(mercaptomethylthio)-1,3-dithiane, and 2-(2,2-bis(mercaptomethylthio)ethyl)-1,3-dithietane; and
the compound represented by Formula (2), but these are not limited to the exemplified compounds. According to the present embodiment, at least one selected from these can be used in combination.

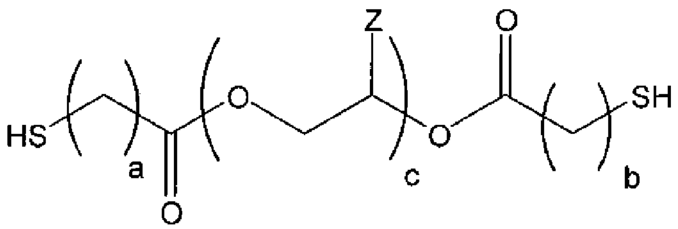
(2)

In Formula (2), a and b each independently represent an integer of 1 to 4, and c represents an integer of 1 to 3. Z represents hydrogen or a methyl group, and in a case where a plurality of Z's exist together, Z's may be identical to or different from each other.

Examples of the thiol compound having a hydroxy group include 2-mercaptoethanol, 3-mercapto-1,2-propanediol, glycerin bis(mercaptoacetate), 4-mercaptophenol, 2,3-dimercapto-1-propanol, pentaerythritol tris(3-mercaptopropionate), and pentaerythritol tris(thioglycolate) .

However, the present invention is not limited to these exemplified compounds.

Oligomers of these active hydrogen compounds or a halogen-substituted product such as a chlorine-substituted product and a bromine-substituted product may be used. These active hydrogen compounds may be used singly or two or more kinds thereof may be used in a mixture.

According to the present embodiment, in view of physical properties such as mechanical strength of the obtainable molded product, it is preferable that a trifunctional or higher functional active hydrogen compound is used as the active hydrogen compound (C) .

Specifically, at least one selected from pentaerythritol tetrakis(2-mercaptoacetate), pentaerythritol tetrakis(3-mercaptopropionate), 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 1,1,3,3-tetrakis(mercaptomethylthio) propane, and trimethylolpropane tris(3-mercaptopropionate) is preferably used.

Examples of the preferable combination of the polyol compound (B) and the active hydrogen compound (C) include

a combination of polyethylene glycol with at least one selected from pentaerythritol tetrakis (2-mercaptoacetate), and 4-mercaptomethyl-1,8-dimercapto-3,6-dithiaoctane,

a combination of polypropylene glycol with at least one selected from pentaerythritol tetrakis(2-mercaptoacetate) and 4-mercaptomethyl-1,8-dimercapto-3,6-dithiaoctane,

a combination of a polypropylene glycol adduct of bisphenol A with 4-mercaptomethyl-1,8-dimercapto-3,6-dithiaoctane, and

a combination of at least one selected from a polyester compound formed of 3-methyl-1,5-pentanediol, adipic acid, and isophthalic acid with 4-mercaptomethyl-1,8-dimercapto-3,6-dithiaoctane, but the present invention is not limited to these combinations.

Photochromic compound (D)

According to the present embodiment, examples of the photochromic compound (D) are not limited, an arbitrary compound can be appropriately selected from known compounds that can be used for a photochromic lens, to be used. For example, one or more of a spiropyran-based compound, a spirooxazine-based compound, a fulgide-based compound, a naphthopyran-based compound, and a bisimidazole compound may be used depending on the desired coloration, and at least one selected from Formulae (a) and (b) can be used.

Examples of the spiropyran-based compound include each substituent in which an indole ring and a benzene ring of indolinospyrobenzopyran are substituted with halogen, methyl, ethyl, methylene, ethylene, or a hydroxyl group, each substituent in which an indole ring and a naphthalene ring of indolinospyrannaphthopyran are substituted with halogen, methyl, ethyl, methylene, ethylene, or a hydroxyl group, each substituent in which an indole ring of indolinospyroquinolinopyran is substituted with halogen, methyl, ethyl, methylene, ethylene, or a hydroxyl group, and each substituent in which an indol ring of indolinospyropyridopyran is substituted with halogen, methyl, ethyl, methylene, ethylene, or a hydroxyl group.

Examples of the spirooxazine-based compound include each substituent in which an indole ring and a benzene ring of indolinospyrobenzoxazine is substituted with halogen methyl, ethyl, methylene, ethylene, or a hydroxyl group, each substituent in which an indole ring and a naphthalene ring of indolinosulfonaphthooxazine are substituted with halogen, methyl, ethyl, methylene, ethylene, or a hydroxyl group, each substituent in which an indole ring of indolinosporophenanthrooxazine is substituted with halogen, methyl, ethyl, methylene, ethylene, or a hydroxyl group, each substituent in which an indole ring of indolinospyroquinolino oxazine is substituted with halogen, methyl, ethyl, methylene, ethylene, or a hydroxyl group, and each substituent in which a piperidine ring and a naphthalene ring of piperidinospironaphthoxazine are substituted with halogen, methyl, ethyl, methylene, ethylene, or a hydroxyl group.

Examples of the fulgide-based compound include N-cyanomethyl-6,7-dihydro-4-methyl-2-phenylspiro(5,6-benzo[b]thi ophenedicarboximido-7,2'-tricyclo[3.3.1.1$^{3,7}$]decane], N-cyanomethyl-6,7-dihydro-2-(p-methoxyphenyl)-4-methylspiro(5,6-benzo[b]thiophenedicarboximido-7,2'-tricyclo[3.3.1.1$^{3,7}$]decane), 6,7-dihydro-N-methoxycarbonylmethyl-4-methyl-2-phenylspiro(5,6-b enzo[b]thiophenedicarboximido-7,2'-tricyclo[3.3.1.1$^{3,7}$]decane), 6,7-dihydro-4-methyl-2-(p-methylphenyl)-N-nitromethylspiro(5,6-b enzo[b]thiophenedicarboximido-7,2'-tricyclo[3.3.1.1$^{3,7}$]decane), N-cyanomethyl-6,7-dihydro-4-cyclopropyl-3-methylspiro(5,6-benzo[ b]thiophenedicarboximido-7,2'-tricyclo[3.3.1.1$^{3,7}$]decane), N-cyanomethyl-6,7-dihydro-4-cyclopropylspiro(5,6-benzo[b]thiophe nedicarboximido-7,2'-tricyclo[3.3.1.1$^{3,7}$]decane), and N-cyanomethyl-6,7-dihydro-2-(p-methoxyphenyl)-4-cyclopropylspiro (5,6-benzo[b]thiophenedicarboximido-7,2'-tricyclo[3.3.1.1$^{3,7}$]deca ne).

Examples of the naphthopyran-based compound include spiro[norbornane-2,2'-[2H]benzo[h]chromene],

spiro[bicyclo[3.3.1]nonane-9,2'-[2H]benzo[h]chromene], 7'-methoxyspiro[bicyclo[3.3.1]nonane-9,2'-[2H]benzo[h]chromene] 7'-methoxyspiro[norbornane-2,2'-[2H]benzo[f]chromene], 2,2-dimethyl-7-octoxy[2H]benzo[h]chromene, spiro[2-bicyclo[3.3.1]nonene-9,2'-[2H]benzo[h]chromene], spiro[2-bicyclo[3.3.1]nonene-9,2'-[2H]benzo[f]chromene], 6-morpholino-3,3-bis(3-fluoro-4-methoxyphenyl)-3H-benzo (f) chrome ne, 5-isopropyl-2,2-diphenyl-2H-benzo(h)chromene, a compound represented by Formula (3), and a compound represented by Formula (4) .

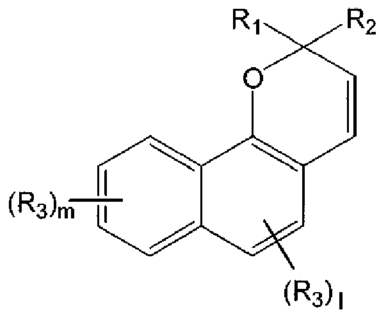

(3)

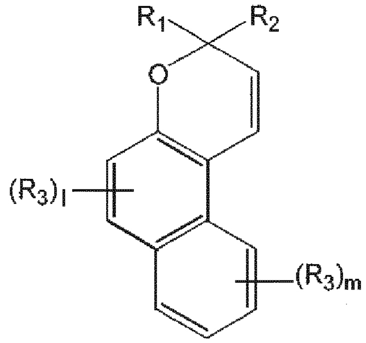

(4)

In Formulae (3) and (4), $R_1$ and $R_2$ may be identical to or different from each other and independently represent a hydrogen;
a linear or branched alkyl group having 1 to 12 carbon atoms;
a cycloalkyl group having 3 to 12 carbon atoms;
a substituted or unsubstituted aryl group having 6 to 24 carbon atoms or a substituted or unsubstituted heteroaryl group having 4 to 24 carbon atoms; and
an aralkyl or heteroaralkyl group which group is a linear or branched alkyl group having 1 to 4 carbon atoms is substituted with the aryl group or the heteroaryl group.

A substituent of a substituted aryl group having 6 to 24 carbon atoms or a substituted heteroaryl group having 4 to 24 carbon atoms is at least one selected from a halogen atom, a hydroxy group, a linear or branched alkyl group having 1 to 12 carbon atoms, a linear or branched alkoxy group having 1 to 12 carbon atoms, a linear or branched haloalkyl group having 1 to 12 carbon atoms substituted with at least one halogen atom, a linear or branched haloalkoxy group having 1 to 12 carbon atoms substituted with at least one halogen atom, a phenoxy group or a naphthoxy group substituted with at least one linear or branched alkyl group or alkoxy group having 1 to 12 carbon atoms, a linear or branched alkenyl group having 2 to 12 carbon atoms, a $-NH_2$ group, a -NHR group, a $-N(R)_2$ group where R is a linear or branched alkyl group having 1 to 6 carbon atoms and in a case where two R's exist, the two R's may be identical to or different from each other, a methacryloyl group, and an acryloyl group.

$R_3$ may be identical to or different from each other, and independently represent a halogen atom;
a linear or branched alkyl group having 1 to 12 carbon atoms;
a cycloalkyl group having 3 to 12 carbon atoms;
a linear or branched alkoxy group having 1 to 12 carbon atoms;
a linear or branched haloalkyl group having 1 to 12 carbon atoms which is substituted with at least one halogen atom, a halocycloalkyl group having 3 to 12 carbon atoms which is substituted with at least one halogen atom, and a linear or branched haloalkoxy group having 1 to 12 carbon atoms which is substituted with at least one halogen atom;
a substituted or unsubstituted aryl group having 6 to 24 carbon atoms or a heteroaryl group having 4 to 24 carbon atoms having as a substituent, at least one substituent selected from a halogen atom, a hydroxy group, a linear or branched alkyl group having 1 to 12 carbon atoms, a linear or branched alkoxy group having 1 to 12 carbon atoms, a linear or branched haloalkyl group having 1 to 12 carbon atoms substituted with at least one halogen atom, a linear or branched

haloalkoxy group having 1 to 12 carbon atoms which is substituted with at least one halogen atom, a phenoxy group or a naphthoxy group substituted with at least one linear or branched alkyl group or alkoxy group having 1 to 12 carbon atoms, and a linear or branched alkenyl group and amino group having 2 to 12 carbon atoms;
an aralkyl or heteroaralkyl group which group is a linear or branched alkyl group having 1 to 4 carbon atoms is substituted with the aryl group or the heteroaryl group;
a substituted or unsubstituted phenoxy or naphthoxy group having, as a substituent, at least one substituent selected from a linear or branched alkyl group or alkoxy group having 1 to 6 carbon atoms;
$-NH_2$, -NHR, $-CONH_2$, or -CONHR
where R is a linear or branched alkyl group having 1 to 6 carbon atoms; and
$-OCOR_8$ or $-COOR_8$ where, $R_8$ is a linear or branched alkyl group having 1 to 6 carbon atoms, or a cycloalkyl group having 3 to 6 carbon atoms, or, in $R_1$, $R_2$, a phenyl group substituted with at least one substituent of a substituted aryl or substituted heteroaryl group or an unsubstituted phenyl group.

At least two adjacent R3's are bonded to each other, and a carbon atom to which R3's are bonded is included, so as to form one or more aromatic ring groups or nonaromatic ring groups. An aromatic ring group or a nonaromatic ring group include one ring or two annelated rings optionally containing a heteroatom selected from the group consisting of oxygen, sulfur, and nitrogen.

l is an integer of 0 to 2. m is an integer of 0 to 4.

Examples of a naphthopyran-based compound include a compound obtainable by adding a light control dye molecule to at least one terminal of each of a polysiloxane oligomer, a polyalkylene oxide, and a polyalkyl ester described in International Publications WO2013/78086, WO2012/149599, and WO2010/020770, and WO2009/146509 and a compound in which a structure represented by Formula (3) or (4) is bonding with a linking group and which has two or more naphthopyran rings in one molecule.

Preferable examples of the naphthopyran-based compound represented by Formula (3) include a compound represented by Formula (5) (hereinafter, also referred to as compound (5)).

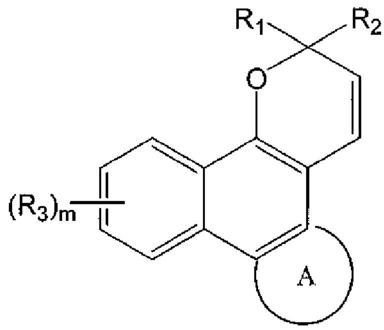

(5)

$R_1$, $R_2$, $R_3$, and m are the same as the above, and A represents an annelated ring of Formulae ($A_1$) to ($A_5$).

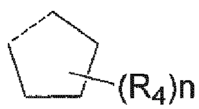

($A_1$)

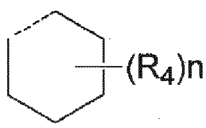

($A_2$)

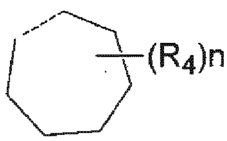

($A_3$)

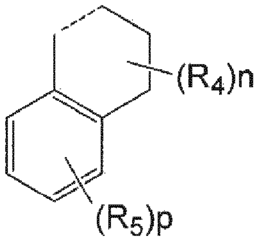

($A_4$)

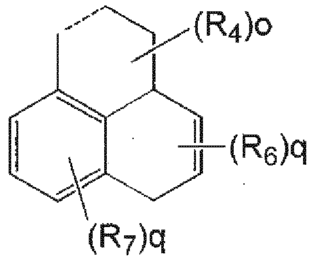

($A_5$)

In these annelated rings of ($A_1$) to ($A_5$), dotted lines represent a carbon $C_5$ carbon $C_6$ bond of a naphthopyran ring of Formula (5). An $\alpha$ bond of an annelated ring ($A_4$) or ($A_5$) is bonded to carbon $C_5$ or carbon $C_6$ of the naphthopyran ring of Formula (5).

$R_4$'s are identical to or different from each other, and independently represent OH, a linear or branched alkyl group or alkoxy group having 1 to 6 carbon atoms, or two $R_4$'s form carbonyl (CO).

$R_5$, $R_6$, and $R_7$ independently represent a halogen atom and preferably fluorine, chlorine, or bromine;

a linear or branched alkyl group having 1 to 12 carbon atoms (preferably, a linear or branched alkyl group having 1 to 6 carbon atoms);

a linear or branched haloalkyl group which is substituted with at least one halogen atom and which has 1 to 6 carbon atoms and is preferably, fluoroalkyl group ;

a cycloalkyl group having 3 to 12 carbon atoms;

a linear or branched alkoxy group having 1 to 6 carbon atoms;

a substituted or unsubstituted phenyl or benzyl group having, as a substituent, in a case where the $R_1$ or $R_2$ group of Formula (5) independently corresponds to an aryl or heteroaryl group, at least one of the substituents described above in definition of the $R_1$ or $R_2$ group ;

$-NH_2$ and -NHR

where R is a linear or branched alkyl group having 1 to 6 carbon atoms;

a substituted or unsubstituted phenoxy or naphthoxy group at least having, as a substituent, a linear or branched alkyl group or alkoxy group having 1 to 6 carbon atoms;

and a $-COR_9$, $-COOR_9$, or $-CONHR_9$ group where $R_9$ represents a linear or branched alkyl group having 1 to 6 carbon atoms, a cycloalkyl group having 3 to 6 carbon atoms, or a substituted or unsubstituted phenyl or benzyl group having, as a substituent, in a case where the $R_1$ or $R_2$ group of Formula (5) independently corresponds to an aryl or heteroaryl group, at least one of the substituents described above in the definition of the $R_1$ or $R_2$ group.

n is an integer of 0 to 6, o is an integer of 0 to 2, p is an integer of 0 to 4, and q is an integer of 0 to 3.

In a case where A represents ($A_4$), n is an integer of 0 to 2, p is an integer of 0 to 4, and in a case where A represents ($A_2$), and n is an integer of 0 to 2.

The photochromic compound (D) of Formula (5) is combined with the color change reaction rate applied for the required application and has high coloration suitability even at 40°C. Easily achievable colors range from orange to blue.

According to the present embodiment, a mixture of compounds (5) in which at least one selected from the group consisting of a compound (5) in which A= ($A_1$), a compound (5) in which A= ($A_2$), a compound (5) in which A= ($A_3$), a compound (5) in which A= ($A_4$), and a compound (5) in which A= ($A_5$) corresponds to a different type is also applicable.

According to the present embodiment, as the compound (5), the compound represented by Formula (6) can be preferably used.

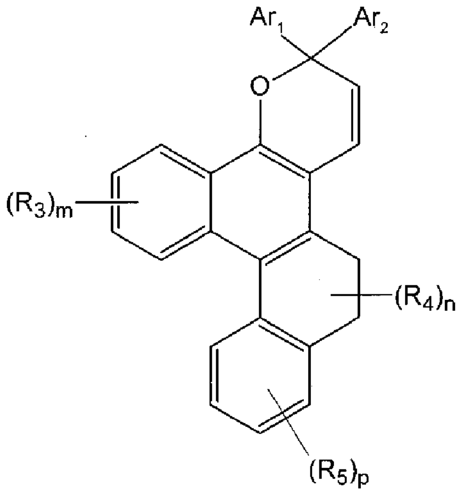

(6)

$Ar_1$ and $Ar_2$ are aromatic groups, may be identical to or different from each other, and represent optionally substituted benzene ring or thiophene ring. Examples of the substituent of the benzene ring or the thiophene ring include a linear or branched alkyl group having 1 to 10 carbon atoms, a linear or branched alkoxy group having 1 to 10 carbon atoms, and a linear or branched alkylmono (ordi) substituted amino group having 1 to 6 carbon atoms. $R_3$, $R_4$, $R_5$, m, n, and p have the same meanings as above.

As the compound (5), the compound represented by Formula (7) can be more preferably used.

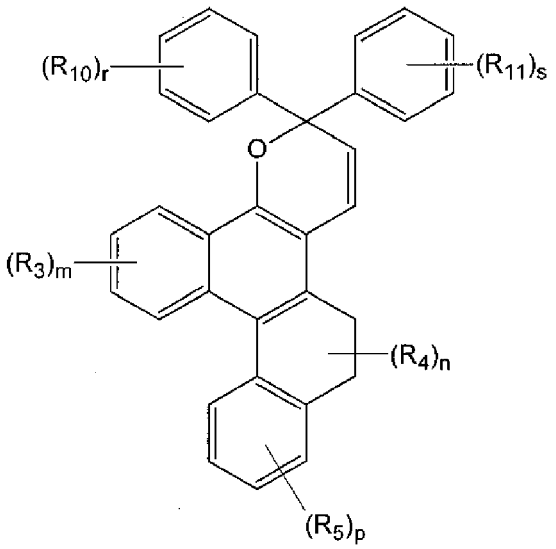

(7)

In Formula (7), $R_{10}$ and $R_{11}$ may be identical to or different from each other and represent linear or branched alkyl group having 1 to 10 carbon atoms, a linear or branched alkoxy group having 1 to 10 carbon atoms, and a linear or branched alkylmono (or di) substituted amino group having 1 to 6 carbon atoms . In a case where m is 2, adjacent $R_3$'s are bonded to each other, and may form a ring structure with a carbon atom to which $R_3$'s are bonded. r and s are integers of 0 to 4. The ring structure is a substituted or unsubstituted aryl group having 6 to 24 carbon atoms or a substituted or unsubstituted heteroaryl group having 3 to 24 carbon atoms.

$R_3$, $R_4$, $R_5$, m, n, and p have the same meanings as above.

Specific examples of the compound represented by Formula (7) include a compound represented by Formula (8) or (9). According to the present embodiment, compounds represented by Formula (8) and Formula (9) are preferable.

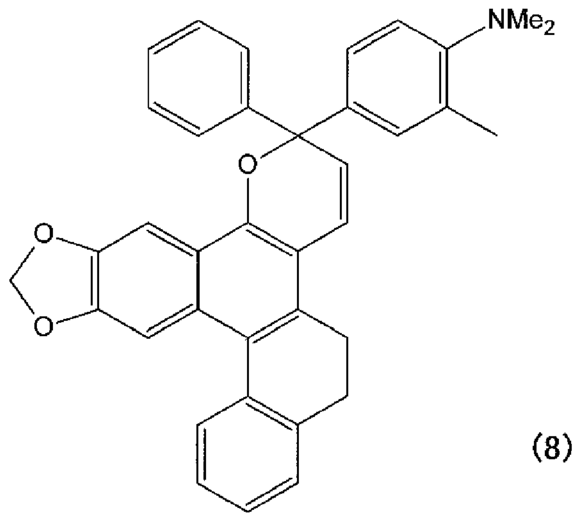

(8)

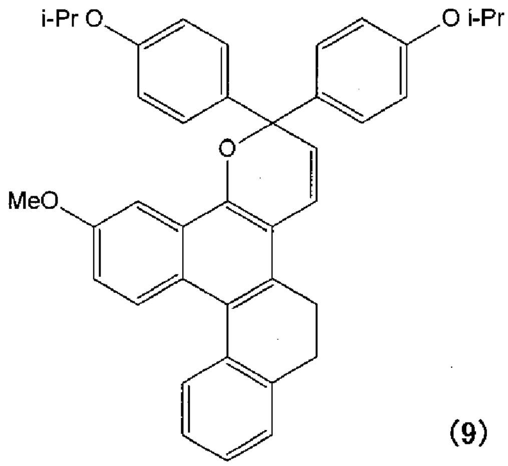

(9)

The compound represented by Formula (5) which is the photochromic compound (D) can be synthesized by the known method. For example, the compound can be synthesized by a method described in PCT Japanese Translation Patent Publication No. 2004-500319.

Specific examples of the naphthopyran-based compound represented by Formula (3) include a compound represented by Formula (10) as a preferable example.

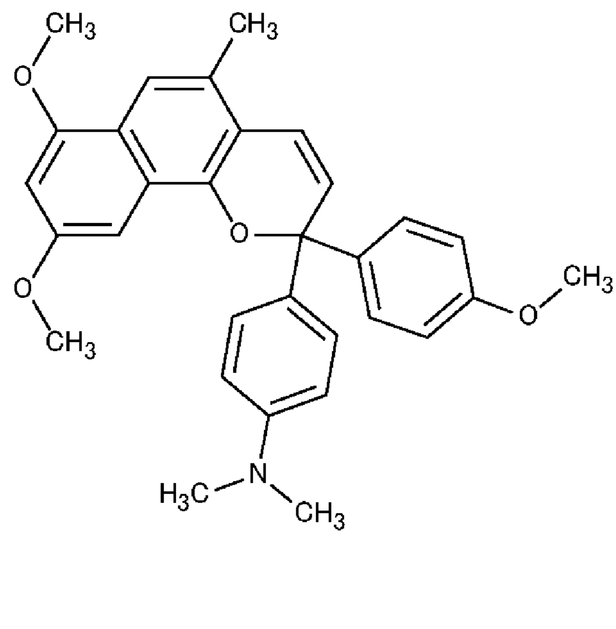

(10)

As the naphthopyran-based compound, one or more kinds of compounds selected from the aforementioned compounds may be used.

At least one selected from Formulae (a) and (b) can be used as the photochromic compound (D) according to the present embodiment.

PC-L-Chain (a)

PC-L-Chain-L'-PC' (b)

PC and PC' represent monovalent groups derived from compounds of Formulae (c) to (f). PC and PC' may be identical to or different from each other.

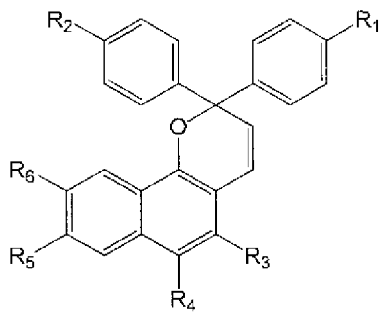

(c)

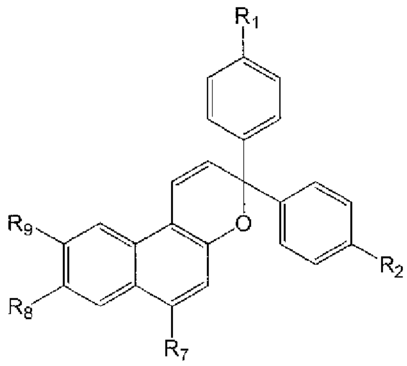

(d)

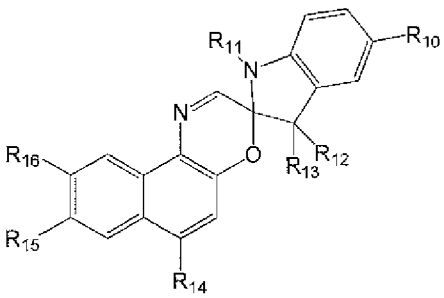

(e)

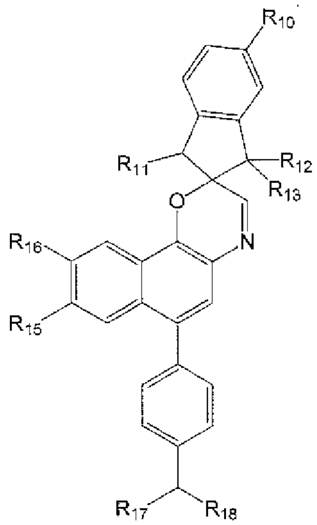

(f)

In Formulae (c) to (f), $R_1$ to $R_{18}$ represent hydrogen, a halogen atom, a carboxyl group, an acetyl group, a formyl group, an optionally substituted C1 to C20 aliphatic group, an optionally substituted C3 to C20 alicyclic group, and an optionally substituted C6 to C20 aromatic organic group, and may be identical to or different from each other. The aliphatic group, the alicyclic group, or the aromatic organic group may contain an oxygen atom and a nitrogen atom. Any one group included in the compound represented by Formulae (c) to (f) is bonded to L or L' which is a divalent organic group.

Examples of the optionally substituted C1 to C20 aliphatic group include a linear or branched C1 to C10 alkyl group, a linear or branched C1 to C10 alkoxy group, a linear or branched C2 to C10 alkenyl group, a C1 to C10 hydroxyalkyl group, a C1 to C10 hydroxyalkoxy group, a C1 to C10 alkyl group substituted with a C1 to C10 alkoxy group, a C1 to C10 alkoxy group substituted with a C1 to C10 alkoxy group, a C1 to C5 haloalkyl group, a C1 to C5 dihaloalkyl group, a C1 to C5 trihaloalkyl group, a C1 to C10 alkylamino group, a C1 to C10 aminoalkyl group, and a linear or branched C1 to C20 alkoxycarbonyl group.

Examples of the optionally substituted C3 to C20 alicyclic group include a C3 to C20 cycloalkyl group and a C6 to C20 bicycloalkyl group.

Examples of the optionally substituted C6 to C20 aromatic organic group include a phenyl group, a C7 to C16 alkoxyphenyl group, an arylamino group, a diarylamino group, an aryl C1 to C5 alkylamino group, a cyclic amino group, an arylcarbonyl group, and an aroyl group.

$R_1$ and $R_2$ each preferably include a hydrogen atom; a halogen atom;

a linear or branched C1 to C10 alkyl group, a linear or branched C1 to C10 alkoxy group, a C1 to C10 hydroxyalkoxy group, a C1 to C10 alkoxy group substituted with a C1 to C10 alkoxy group, a C1 to C5 haloalkyl group, a C1 to C5 dihaloalkyl group, a C1 to C5 trihaloalkyl group, a C1 to C5 alkylamino group, and an optionally substituted C1 to C20 aliphatic group; and

an optionally substituted C6 to C20 aromatic organic group such as a phenyl group, a C7 to C16 alkoxyphenyl group, a C1 to C5 dialkylamino group, an arylamino group, a diarylamino group, an aryl C1 to C5 alkylamino group, and a cyclic amino group. $R_1$ and $R_2$ may be identical to or different from each other.

Examples of $R_3$ preferably include a hydrogen atom; a halogen atom; a carboxyl group; an acetyl group;

an optionally substituted C1 to C20 aliphatic group such as a linear or branched C1 to C10 alkyl group, a linear or branched C2 to C10 alkenyl group, a linear or branched C1 to C10 alkoxy group, a C1 to C10 hydroxyalkyl group, a C1 to C10 alkyl group substituted with a C1 to C10 alkoxy group, a C1 to C10 aminoalkyl group, and a linear or branched C1 to C20 alkoxycarbonyl group;

an optionally substituted C3 to C20 alicyclic group such as a C3 to C20 cycloalkyl group and a C6 to C20 bicycloalkyl group; and

an optionally substituted C6 to C20 aromatic organic group such as an arylcarbonyl group, a formyl group, and an aroyl group.

Examples of $R_4$ preferably include a hydrogen atom; a halogen atom; a carboxyl group; an acetyl group; a formyl group;

an optionally substituted C1 to C20 aliphatic group such as a linear or branched C1 to C10 alkyl group, a linear or branched C2 to C10 alkenyl group, a linear or branched C1 to C10 alkoxy group, a C1 to C10 hydroxyalkyl group, a C1 to C10 alkyl group substituted with C1 to C10 alkoxy, a C1 to C10 aminoalkyl group, and a linear or branched C1 to C20 alkoxycarbonyl group;

an optionally substituted C3 to C20 alicyclic group such as a C3 to C20 cycloalkyl group and a C6 to C20 bicycloalkyl group; and

an optionally substituted C6 to C20 aromatic organic group such as an arylcarbonyl group, an aroyl group, a phenyl group, a C7 to C16 alkoxyphenyl group, a C1 to C10 dialkoxyphenyl group, a C1 to C10 alkylphenyl group, and a C1 to C10 dialkylphenyl group.

$R_3$ and $R_4$ may be bonded to each other. In a case where $R_3$ and $R_4$ are bonded to each other to form a ring structure, examples thereof include Formula (g) or (h). A dotted line portion represents a bond between a carbon atom to which $R_3$ is bonded and a carbon atom to which $R_4$ is bonded.

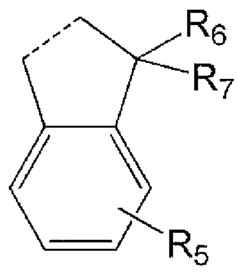

(g)

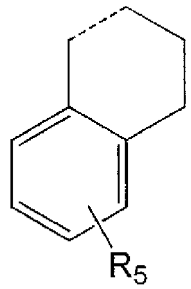

(h)

$R_5$, $R_6$, $R_7$, $R_8$, $R_9$, $R_{10}$, $R_{14}$, $R_{15}$, and $R_{16}$ represent functional groups as in $R_1$ and $R_2$. A plurality of $R_5$ to $R_7$'s existing together may be identical to or different from each other.

$R_{11}$ preferably includes a hydrogen atom; a halogen atom;

an optionally substituted C1 to C20 aliphatic group such as a linear or branched C1 to C20 alkyl group, a C1 to C5 haloalkyl group, a C1 to C5 dihaloalkyl group, and a C1 to C5 trihaloalkyl group;

an optionally substituted C3 to C20 alicyclic group such as a C3 to C20 cycloalkyl group, a C6 to C20 bicycloalkyl group, a C3 to C20 cycloalkyl group substituted with a C1 to C5 alkyl group, and a C6 to C20 bicycloalkyl group substituted with a C1 to C5 alkyl group; and

an optionally substituted C6 to C20 aromatic organic group such as an aryl group which is substituted with a C1 to C5 alkyl group.

$R_{12}$ and $R_{13}$ each preferably include a hydrogen atom; a halogen atom;

an optionally substituted C1 to C20 aliphatic group such as a C1 to C10 alkyl group and a C1 to C5 alkylalkoxycarbonyl group; and an optionally substituted C3 to C20 alicyclic group such as a C5 to C7 cycloalkyl group.

$R_{17}$ and $R_{18}$ each preferably include a hydrogen atom; a halogen atom;

an optionally substituted C1 to C20 aliphatic group such as a linear or branched C1 to C10 alkyl group and a C1 to C10 hydroxyalkyl group; and an optionally substituted C3 to C20 alicyclic group such as a C5 to C7 cycloalkyl group.

In Formula (a) or (b), L and L' each represent a divalent organic group including one or more selected from an oxyethylene chain, an oxypropylene chain, a (thio)ester group, and a (thio)amide group.

Specifically, L and L' are represented by Formulae (i) to (o) . L and L' may be identical to or different from each other.

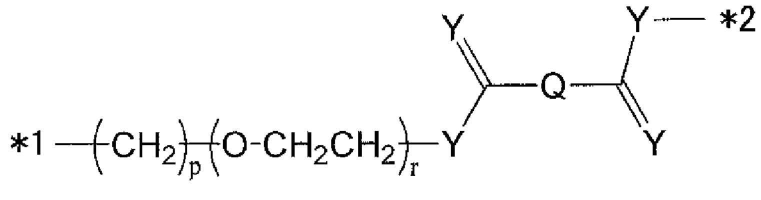

(i)

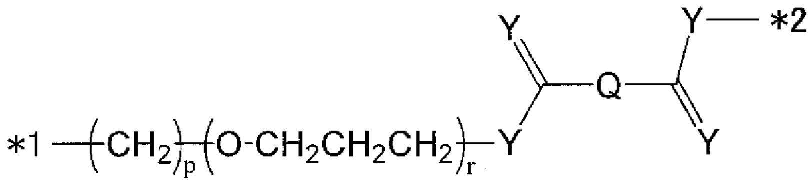 (j)

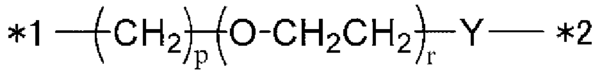 (k)

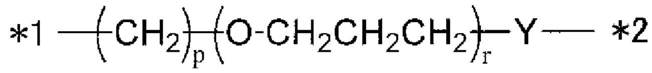 (l)

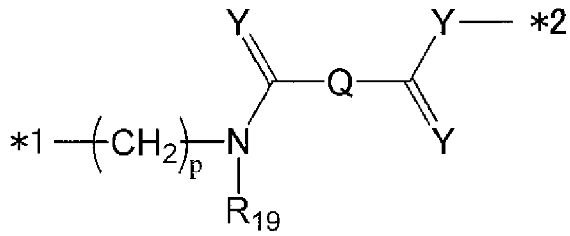 (m)

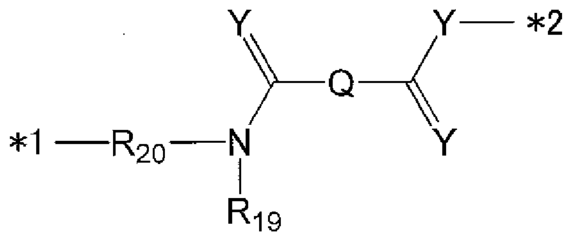 (n)

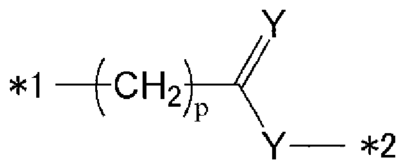 (o)

In Formulae (i) to (o),
Y represents oxygen or sulfur.
$R_{19}$ represents hydrogen or a linear or branched C1 to C10 alkyl group.
$R_{20}$ represents a linear or branched C1 to C10 alkyl group.
p represents an integer of 0 to 15, and r represents an integer of 0 to 10.
Q represents a divalent group derived from a linear or branched C1 to C10 alkylene group, a C1 to C10 alkenylene group, or a substituted aryl group at the 1,2-, 1,3-, and 1,4-position, a divalent group derived from a substituted heteroaryl group.
*1 and *2 each represent a bond, *1 is bonded to a monovalent or divalent organic group represented by "Chain", and *2 is bonded to a monovalent organic group represented by PC or PC'.

In Formula (a) or (b), "Chain" represents a monovalent or divalent organic group including one or more selected from a polysiloxane chain and a polyoxyalkylene chain.

Examples of the polysiloxane chain include a polydimethylsiloxane chain, a polymethylphenylsiloxane chain, and a polymethylhydrosiloxane chain.

Examples of the polyoxyalkylene chain include a polyoxyethylene chain, a polyoxypropylene chain, and a polyoxyhexamethylene chain.

Specifically,
in a case where the photochromic compound is Formula (a), "Chain" represents a monovalent organic group of Formula

(p) or (q).

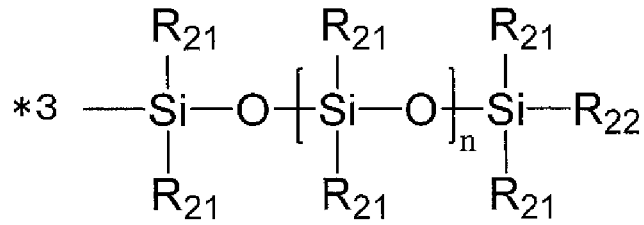

(p)

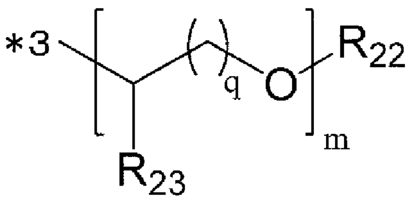

(q)

In a case where the photochromic compound is Formula (b), "Chain" represents a divalent organic group of Formula (r) or (s).

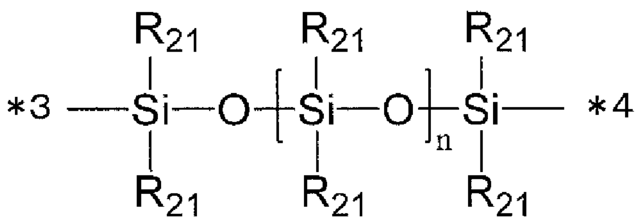

(r)

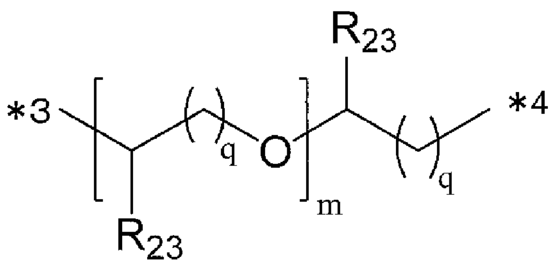

(s)

In Formulae (p) to (s),
$R_{21}$ represents a linear or branched C1 to C10 alkyl group.
$R_{22}$ represents a linear or branched C1 to C10 alkyl group.
$R_{23}$ represents hydrogen, a methyl group, and an ethyl group.
n represents an integer of 4 to 75, and m represents an integer of 1 to 50.
q represents an integer of 1 to 3.
*3 and *4 each represent a bond, *3 is bonded to a divalent organic group represented by L, and *4 is bonded to a divalent organic group represented by L'.

The photochromic compound of the present invention can be obtained by methods described in International Publications WO2009/146509, WO2010/20770, WO2012/149599, and WO2012/162725.

Examples of the photochromic compound (D) according to the present embodiment include, manufactured by Vivimed Labs Ltd., Reversacol Humber Blue (a polydimethylsiloxane chain, naphthopyran-based chromophore (Formula (c)), Reversacol Calder Blue (a polydimethylsiloxane chain, a naphthopyran-based chromophore (Formula (c)), Reversacol Trent Blue (a polydimethylsiloxane chain, a naphthopyran-based chromophore (Formula (c)), Reversacol Pennine Green (a polydimethylsiloxane chain, a naphthopyran-based chromophore (Formula (c)), Reversacol Heath Green (a polyoxyalkylene chain, a naphthopyran-based chromophore (Formula (c)), Reversacol Chilli Red (a polydimethylsiloxane chain, a naphthopyran-based chromophore (Formula (c)), Reversacol Wembley Grey (polyoxyalkylene chain, a

naphthopyran-based chromophore (Formula (c)), and Reversacol Cayenne Red (polyoxyalkylene chain, a naphthopyran-based chromophore (Formula (c)).

Other components

According to the present embodiment, a polymerization catalyst, an internal release agent, and a resin modifier, may be further included, in addition to the above (A) to (D) components.

Examples of the polymerization catalyst include a tertiary amine compound and an inorganic acid salt or an organic acid salt thereof, a metal compound, quaternary ammonium salt, or organic sulfonic acid.

As the internal release agent, an acidic phosphate ester can be used. Examples of the acidic phosphate ester include phosphoric acid monoester and phosphoric acid diester, and these may be used singly or two or more types thereof may be used in a mixture.

Examples of the resin modifier include an episulfide compound, an alcohol compound, an amine compound, an epoxy compound, an organic acid and an anhydride thereof, and an olefin compound including a (meth)acrylate compound.

Method of manufacturing polymerizable composition for an optical material

The polymerizable composition for an optical material according to the present embodiment can be prepared by mixing the isocyanate compound (A), the polyol compound (B), the active hydrogen compound (C), and the photochromic compound (D).

According to the present embodiment, the lower limit of the functional group equivalent ratio (B/A) of the polyol compound (B) with respect to the polyisocyanate compound (A) is equal to or greater than 0.02, preferably equal to or greater than 0.10, more preferably equal to or greater than 0.15, even more preferably equal to or greater than 0.20, furthermore preferably equal to or greater than 0.25, and an upper limit is equal to or less than 0.60, preferably equal to or less than 0.50, more preferably equal to or less than 0.40, and even more preferably equal to or less than 0.30. The upper limit and the lower limit may be appropriately combined.

The lower limit of the functional group equivalent ratio (C/A) of the active hydrogen compound (C) with respect to the polyisocyanate compound (A) is equal to or greater than 0.30, preferably equal to or greater than 0.40, more preferably equal to or greater than 0.50, even more preferably equal to or greater than 0.60, and the upper limit is equal to or less than 0.99, preferably equal to or less than 0.98, more preferably equal to or less than 0.90, and even more preferably equal to or less than 0.80. The upper limit and the lower limit may be appropriately combined.

In a case where the equivalent ratio is in this range, it is possible to provide a well-balanced optical material that exhibits a high photochromic performance and has excellent mechanical properties that are characteristics of a poly(thio)urethane-based resin.

In a case where the compound represented by Formula (I) is polyethylene glycol, if the functional group equivalent ratio (B/A) is 0.1 to 0.6, a color developability performance is further improved, and cloudiness of a polymer is further suppressed.

In a case where the compound represented by Formula (I) is polypropylene glycol, if the functional group equivalent ratio (B/A) is 0.06 to 0.6, a color developability performance is further improved, and cloudiness of a polymer is further suppressed.

With respect to the compound represented by Formula (II), if the functional group equivalent ratio (B/A) is 0.06 to 0.6, a color developability performance is further improved, and cloudiness of a polymer is further suppressed.

In a case where the compound represented by Formula (III) is a polyethylene glycol adduct of bisphenol A or a polypropylene glycol adduct of bisphenol A, if the functional group equivalent ratio (B/A) is 0.06 to 0.6, a color developability performance is further improved, and cloudiness of a polymer is further suppressed.

In a case where the compound represented by Formula (IV) is a polyester compound obtainable by reacting an equimolar mixture of adipic acid and isophthalic acid to 3-methyl-1,5-pentanediol in an equimolar amount, if the functional group equivalent ratio (B/A) is 0.02 to 0.2, a color developability performance is further improved, and the cloudiness of a polymer is further suppressed.

In the above composition, a molar ratio (NCO group / (OH group + SH group)) of NCO groups included in the polyisocyanate compound (A) with respect to a sum of OH groups and SH groups included in the active hydrogen compound (C) and the polyol compound (B)) is in a range of 1.1 to 1.6, preferably in the range of 1.25 to 1.6, even more preferably in the range of 1.25 to 1.5, and furthermore preferably in the range of 1.25 to 1.4.

In a case where the molar ratio of NCO group/ (OH group+SH group) in the above range, the molded product obtainable from the polymerizable composition of the present invention can suppress the decrease of the photochromic performance over time and exhibit a photochromic performance in a stable manner.

The photochromic compound (D) can be used by 10 ppm to 5,000 ppm with respect to the sum of the isocyanate

compound (A), the polyol compound (B), and the active hydrogen compound (C).

The temperature in a case where the polymerizable composition is prepared by mixing the polyisocyanate compound (A), the polyol compound (B), the active hydrogen compound (C), the photochromic compound (D), and the additives thereof is generally equal to or lower than 25°C. In view of the pot life of the polymerizable composition, it is preferable that the temperature may be further decreased in some cases. However, in a case where the solubility of the catalyst, the internal release agent, and the additive to the monomer is not satisfactory, it is possible to heat and dissolving the catalyst, the internal release agent, and the additive to the monomer and the resin modifier, in advance.

The mixing order and the mixing method of the respective components in the composition are not limited as long as the components can be uniformly mixed, and the mixing can be performed by a known method. Examples of the known method include a method of preparing a master batch containing a predetermined amount of an additive and dispersing and dissolving the master batch in a solvent.

According to the present embodiment, it is possible to obtain a molded product by polymerizing and curing the polymerizable composition. The concentration of the SH groups of the molded product can be obtained by the IR analysis method. For example, an IR spectrum of a resin sample cut and polished to a thickness of 0.35 mm is measured using an IR analyzer Spectrum One manufactured by PERKIN-ELMER Co., Ltd., an absorbance is obtained by the baseline method by using an absorption with an NCO of 2,257 $cm^{-1}$, and SH of 2,550 $cm^{-1}$, and the concentration of the SH groups can be obtained by the calculation of the following expressions from a calibration curve prepared in advance.

$$\text{NCO wt\%} = \frac{[8.9439(\text{NCOA}-0.0775)-0.2238]\times 0.042}{1300}\times 100$$

$$\text{SH wt\%} = \frac{[2.8961(\text{SHA}-0.0633)-0.0167]\times 33}{1300}\times 100$$

**NCOA : NCO Abs- /mm, SHA : SH Abs. /mm**

The concentration of the SH groups of the molded product thus measured is less than 1.0 wt%, preferably equal to or less than 0.5 wt%, more preferably equal to or less than 0.3 wt%, and furthermore preferably equal to or less than 0.1 wt%. It is most preferable that the SH group of the molded product is not substantially detected. The molded product in the above range can suppress the decrease of the photochromic performance over time, and a photochromic performance can be exhibited in a stable manner. The molded product according to the present embodiment can be used as an optical material.

According to the present embodiment, the method of manufacturing the optical material is not limited. However, examples of the preferable manufacturing method include cast polymerization. First, the polymerizable composition is injected between molded dies held by a gasket or a tape. In this case, depending on the physical properties required for the plastic lens to be obtained, in many cases, a defoaming treatment under reduced pressure, a filtration treatment under pressurization, and depressurization are preferably performed, if necessary.

The polymerization condition largely differs depending on the composition of the polymerizable composition, the kind and the use amount of the catalyst, and the shape of the mold, and thus the polymerization condition is not limited. However, the polymerization is performed at the temperature of -50°C to 150°C and over 1 to 50 hour(h)s. In some cases, it is preferable that the temperature is maintained or is gradually increased in a temperature range of 10°C to 150°C, and the polymerizable composition is cured for 1 to 25 hs.

The optical material may be subjected to a treatment such as annealing, if necessary. With respect to the treatment temperature, the treatment is generally performed at 50°C to 150°C, preferably performed at 90°C to 140°C, and more preferably at 100°C to 130°C.

According to the present embodiment, in order to mold the resin, in addition to the above "other components", in the same manner as the known molding method, in accordance with the purpose, various additives such as a chain extender, a crosslinking agent, a light stabilizer, an UV absorber, an antioxidant, a blueing agent, an oil soluble dye, a filler, and an adhesiveness improver may be added.

Application

The polymerizable composition of the present embodiment may be obtained as molded products in various shapes by changing types of the mold in a case of the cast polymerization. The molded product includes a photochromic performance and includes a high refractive index and high transparency, thus can be used in various optical materials such as a plastic lens. More specifically, the molded product can be suitably used as a plastic spectacle lens or a plastic polarized lens.

Plastic spectacle lens

The plastic spectacle lens using the lens substrate formed of the molded product of the present embodiment may be used by providing a coating layer on one surface or both surfaces thereof.

The plastic spectacle lens of the present embodiment is formed of a lens substrate formed of the polymerizable composition and a coating layer.

Specific examples of the coating layer include a primer layer, a hard coat layer, an antireflection layer, an anti-fog coating layer, an antifouling layer, and a water repellent layer. These coating layers may be used singly or a plurality of coating layers may be used in multilayers. In a case where coating layers are provided on the both surfaces, the same coating layer may be provided on each surface, or different coating layers may be provided on each surface.

These coating layers each contain an UV absorber for the purpose of protecting lenses or eyes from UV rays, an infrared absorbing agent for the purpose of protecting eyes from infrared rays, contain a light stabilizer and an antioxidant, for the purpose of improving the weather fastness of the lens, and contain a dye, a pigment, or an antistatic agent for the purpose of improving the fashionability of the lens, and other known additives may be used in combination for enhancing the performance of the lens. With respect to the layer to be coated by application, various leveling agents for improving applicability may be used.

The primer layer is generally formed between a hard coat layer described below and the lens. The primer layer is a coating layer intended to improve the adhesiveness between the hard coat layer formed thereon and the lens and the impact resistance can be improved in some cases. Any material can be used as the primer layer as long as the material has high adhesiveness to the obtained lens, but a primer composition including a urethane-based resin, an epoxy-based resin, a polyester-based resin, a melamine-based resin, or polyvinyl acetal as main components is generally used. For the purpose of adjusting the viscosity of the composition, a suitable solvent which does not affect the lens may be used as the primer composition. It is obvious that no solvent may be used.

The primer layer can be formed by any one of a coating method or a dry method. In the case where a coating method is used, a primer layer is formed by applying the primer composition to a lens by a known coating method such as spin coating and dip coating and then solidifying the primer composition. In a case where a dry method is used, a primer layer is formed by a known dry method such as a CVD method or a vacuum evaporation method. In a case where a primer layer is formed, for the purpose of improving adhesiveness, the surface of the lens may be subjected to pretreatments such as an alkali treatment, a plasma treatment, and an UV treatment, if necessary.

The hard coat layer is a coating layer intended to provide the lens surface with functions such as scratch resistance, wear resistance, moisture resistance, hot water resistance, heat resistance, and weather fastness.

Generally, the hard coat layer is formed of a hard coat composition including an organosilicon compound having curability and one or more kinds of oxide fine particles of an element selected from the element group consisting of Si, Al, Sn, Sb, Ta, Ce, La, Fe, Zn, W, Zr, In, and Ti and/or one or more kinds of oxide fine particles formed of a composite oxide of two or more elements selected from the element groups is used.

In addition to the above components, the hard coat composition preferably includes at least any one of amines, amino acids, a metal acetylacetonate complex, organic acid metal salt, perchloric acids, a salt of perchloric acids, acids, metal chloride, and a polyfunctional epoxy compound. A suitable solvent that does not affect the lens may be used for the hard coat composition, or no solvent may be used.

The hard coat layer is generally formed by applying the hard coat composition by a known coating method such as spin coating and dip coating and curing the hard coat composition. Examples of the curing method include heat curing and a curing method by energy ray irradiation such as an UV ray or visible light. In order to suppress the generation of interference fringes, it is preferable that the difference in refractive indexes of the hard coat layer and the lens is within a range of $\pm 0.1$.

The antireflection layer is generally formed on the hard coat layer, if necessary. The antireflection layer includes an inorganic antireflection layer and an organic antireflection layer. In a case where the antireflection layer is inorganic, inorganic oxide such as $SiO_2$ or $TiO_2$ is used, and the antireflection layer is formed by a dry method such as a vacuum deposition method, a sputtering method, an ion plating method, an ion beam assist method, and a CVD method. In a case where the antireflection layer is organic, a composition containing an organosilicon compound and silica-based fine particles provided with an internal cavity is used, and the antireflection layer is formed by a wet method.

The antireflection layer has a single layer and a multiple layer. In the case where the antireflection layer is used as a single layer, it is preferable that the refractive index thereof is lower than that of the hard coat layer by at least equal to or greater than 0.1. In order to effectively exhibit an antireflection function, it is preferable to use a multilayer antireflection film. In that case, a low refractive index film and a high refractive index film are alternately laminated. In this case, a refractive index difference of the low refractive index film and the high refractive index film is preferably equal to or greater than 0.1. The high refractive index film includes a film of ZnO, $TiO_2$, $CeO_2$, $Sb_2O_5$, $SnO_2$, $ZrO_2$, and $Ta_2O_5$, and the low refractive index film includes a $SiO_2$ film.

An anti-fog layer, an antifouling layer, and a water repellent layer may be formed on the antireflection layer, if

necessary. With respect to the method of forming an anti-fog layer, an antifouling layer, and a water repellent layer, as long as the method does not give an adverse effect on the antireflection function, the treatment method, and the treatment material are not limited. Known antifogging treatment methods, antifouling treatment methods, water repellent treatment methods, and materials can be used. Examples of the antifogging treatment method and the antifouling treatment method include a method of covering the surface with a surfactant, a method of adding a hydrophilic film to the surface so as to cause the surface to be water absorbent, a method of covering the surface with fine irregularities so as to increase water absorption, a method of causing the surface to be water absorbent by using photocatalytic activity, and a method of preventing adhesion of water droplets by applying a super water repellent treatment. Examples of the water repellent treatment method include a method of forming a water repellent treated layer by applying a fluorine-containing silane compound by vapor deposition or sputtering and a method of dissolving a fluorine-containing silane compound in a solvent and performing coating to form a water repellent treated layer.

Plastic polarized lens

The plastic polarized lens of the present embodiment includes a polarizing film and a substrate layer including a molded product obtainable by curing a polymerizable composition for an optical material of the present embodiment formed at least one surface of the polarizing film.

The polarizing film according to the present embodiment is formed of a thermoplastic resin. Examples of the thermoplastic resin include thermoplastic polyester, thermoplastic polycarbonate, thermoplastic polyolefin, and thermoplastic polyimide. In view of water resistance, heat resistance, and form workability, thermoplastic polyester and thermoplastic polycarbonate are preferable, and thermoplastic polyester is more preferable.

Examples of the thermoplastic polyester include polyethylene terephthalate, polyethylene naphthalate, and polybutylene terephthalate. In view of water resistance, heat resistance, and form workability, polyethylene terephthalate is preferable.

Specific examples of the polarizing film include a thermoplastic polyester polarizing film containing a dichroic dye, a polyvinyl alcohol polarizing film containing iodine, and a polyvinyl alcohol polarizing film containing a dichroic dye.

The polarizing film is dried and stabilized, and thus may be used after a heating treatment is performed.

In order to improve the adhesiveness to the acrylic resin, the polarizing film may be used after one or more kinds of pretreatments selected from a primer coating treatment, a chemical treatment (a chemical treatment such as gas or alkali), a corona discharge treatment, a plasma treatment, an UV ray irradiation treatment, an electron beam irradiation treatment, a surface roughening treatment, and a flame treatment may be performed. Among such pretreatments, one or more kinds selected from a primer coating treatment, a chemical treatment, a corona discharge treatment, and a plasma treatment are furthermore preferable.

The plastic polarized lens of the present embodiment can be obtained by providing a substrate layer that can be obtained by curing the polymerizable composition for an optical material of the present embodiment, on at least one surface of the polarizing film.

The method of manufacturing the plastic polarized lens is not particularly limited. However, preferable examples thereof include a cast polymerization method.

For example, the method of manufacturing the plastic polarized lens of the present embodiment may include a step of fixing a polarizing film to a lens casting mold in a state of being separated from a mold;
a step of injecting a polymerizable composition for an optical material to at least one of cavities formed between the polarizing film and the mold; and
a step of polymerizing and curing the polymerizable composition for an optical material and laminating a substrate layer on at least one surface of the polarizing film.

The lens casting mold generally includes two substantially disc-shaped glass molds held by a gasket. The polarizing film is mounted in the cavity of this lens casting mold so as to be parallel to the inner surface of the mold on the front side where the film surface faces. A cavity portion is formed between the polarizing film and the mold. The polarizing film may be shaped in advance.

The polymerization condition of the polymerizable composition for an optical material differs depending on the composition of the polymerizable composition, the types and the use amount of the catalyst, and the shape of the mold, but the polymerization is performed at the temperature of 5°C to 140°C for 1 to 50 hs. In some cases, it is preferable that the temperature is maintained or is gradually increased in a temperature range of 5°C to 130°C, and the polymerizable composition is cured for 1 to 25 hs.

The layered product cured by polymerization is released from the mold, so as to obtain a plastic polarized lens of the present embodiment.

According to the present embodiment, the layered product after polymerization and release may be subjected to a heating treatment such as annealing. With respect to the treatment temperature, in view of the effects of the present invention, the treatment is performed at 90°C to 150°C, preferably performed at 110°C to 130°C, and more preferably

performed at 115°C to 125°C. In view of the effect of the present invention, the treatment time is in the range of 1 to 10 hs and preferably 2 to 5 hs.

The coating layer which is the same as the plastic spectacle lens may be formed on the surface of the obtained substrate layer.

Examples

Subsequently, the present invention is specifically described with reference to the examples. However, the present invention is not limited to the examples. With respect to the examples and the comparative examples, methods and devices used in evaluations are as follows.

Evaluation on stability of photochromic performance (accelerated test)

An accelerated test was performed using a QUV accelerated weather fastness tester QUV/SE manufactured by Q-Lab Corporation equipped with a UVA-340 type lamp under conditions of irradiation intensity of 0.50 $W/m^2$, irradiation time of 150 hs, and a temperature of 50°C, evaluation of light control performance (light transmittance during color development) before and after acceleration was performed in the following method. It is possible to consider that the smaller the difference in transmittance before and after the accelerated test is, the less deterioration of the photochromic performance is and the more stable.

Evaluation on light control performance

Spectroscopy in a case where a color of a sample of the molded product processed to a thickness of 2.0 mm was developed for 5 minutes by using a light source device of a metal halide lamp (180 W) at a temperature of 19°C under condition of the UV intensity of 1.2 $mW/cm^2$ measured by an integrated photometer was measured in a transmission measurement system.

- Light transmittance at color development: Light transmittance at 550 nm in a case where color is developed under the above conditions
  In a case where this value was small, the light shielding properties during color development were high, and the photochromic performance were high.
- Light source: Metal halide light source device "LA-180ME" manufactured by Hayashi Watch-Works Co., Ltd.
- Integrated photometer: Cumulative photometer "UIT-102 (Optical receiver UVD 365PD)" manufactured by Ushio Inc.
- Transmission measurement system: "MV-3150" manufactured by JASCO Corporation

Analysis on residual functional group by IR measurement

The IR spectrum of a sample of a resin cut and polished to a thickness of 0.35 mm was measured using an IR analyzer by using Spectrum One manufactured by PerkinElmer, Inc. An absorbance was obtained by a baseline method by using absorption of NCO of 2,257 $cm^{-1}$ and SH of 2, 550 $cm^{-1}$, and a residual functional group was calculated from a calibration curve prepared in advance by the following expressions.

$$\text{NCO wt\%} = \frac{[8.9439(\text{NCOA}-0.0775)-0.2238]\times 0.042}{1300}\times 100$$

$$\text{SH wt\%} = \frac{[2.8961(\text{SHA}-0.0633)-0.0167]\times 33}{1300}\times 100$$

**NCOA : NCO Abs. /mm, SHA : SH Abs. /mm**

Comparative Example 1

0.05 parts by mass of Formula (9) compound as the photochromic compound and 0.10 parts by mass of dimethyltin dichloride were added to 41.0 parts by mass of 2,5(2,6)-bis(isocyanatomethyl) bicyclo[2.2.1]heptane, and were dissolved by mixing and stirring. 22.5 parts by mass of polypropylene glycol having a number average molecular weight of 700 and 36.5 parts by mass of pentaerythritol tetrakis(2-mercaptoacetate) were added to this mixed solution

and were mixed and stirred. When each solution became homogeneous, deaeration was performed at 5 mmHg for 20 minutes, and this solution was injected to a polyethylene sheet mold. These were introduced to a furnace at 20°C, were maintained for 8 hs, and further heated to 120°C over 12 hs. The solutions were held to be heated at 120°C for three hs, the mold was took out from the furnace, and the mold was removed, to obtain a molded product (disc-shaped product having a diameter of 45 mm and a thickness of 2.0 mm) obtained by polymerization.

The molded product was colorless and transparent, and had a satisfactory light control performance of being immediately colored in purple in a case of being put placed under sunlight and being decolored in a case where a light ray was shielded. Subsequently, quantitative determination of a residual -NCO group and a residual -SH group of the molded product was performed by an IR analysis method. The light control performances of these molded products before and after the accelerated test were evaluated. These results are provided in Table 1.

Comparative Example 2 and Examples 1 to 3

Molded products were prepared in the same manner as in Comparative Example 1, except for changing addition amounts of 2,5(2,6)-bis(isocyanatomethyl)bicyclo[2.2.1]heptane, polypropylene glycol having a number average molecular weight of 700, and pentaerythritol tetrakis(2-mercaptoacetate) as presented in Table 1.

Each molded product was colorless and transparent, and had a satisfactory light control performance of being immediately colored in purple in a case of being put placed under sunlight and being decolored in a case where a light ray was shielded. Subsequently, quantitative determination of a residual -NCO group and a residual -SH group of these molded products was performed by an IR analysis method. The light control performances of these molded products before and after the accelerated test were evaluated. These results are provided in Table 1.

Table 1

| | Composition | | | | Molded product | | Transmittance during color development | | |
|---|---|---|---|---|---|---|---|---|---|
| | Component (A) (mass%) | Component (B) (mass%) | Component (C) (mass%) | Molar ratio (*1) | Residual NCO (wt%) | Residual SH (wt%) | Before accelerated test (%) | After accelerated test (%) | Amount of change (%) |
| Comparative Example 1 | 41.0 | 22.5 | 36.5 | 50/50 | 0.072 | 3.8 | 32.8 | 79.0 | 46.2 |
| Comparative Example 2 | 42.7 | 22.5 | 34.8 | 52/48 | 0.346 | 1.0 | 36.7 | 63.9 | 27.2 |
| Example 1 | 44.4 | 22.6 | 33.0 | 54/46 | 0.587 | Not detected | 33.1 | 42.1 | 9.0 |
| Example 2 | 46.1 | 22.6 | 31.3 | 56/44 | *2 | Not detected | 33.0 | 39.3 | 6.3 |
| Example 3 | 47.8 | 22.6 | 29.6 | 58/42 | *2 | Not detected | 33.0 | 43.3 | 10.3 |

Component (A): 2,5(2,6)-bis(isocyanatomethyl)bicyclo[2.2.1]heptane
Component (B): Polypropylene glycol having a number average molecular weight of 700
Component (C): pentaerythritol tetrakis(2-mercaptoacetate)
*1: NCO group/(OH group+SH group) *2: Exceeding measurable range

From the results of Comparative Examples 1 and 2 presented in Table 1, in a case where the residual amount of the SH group in the molded product increased to 1.0 wt% or greater, the transmittance after the accelerated test greatly increased, most of the light control function was lost, and deterioration of the photochromic performance was observed. On the other hand, as in Examples 1 to 3, in a case where the residual amount of the SH group in the molded product was less than 1.0 wt%, it was checked that, the amount of change in the transmittance was small, and the photochromic performance was stable.

It was assumed that the same result was able to be obtained with the plastic polarized lens.

This application is based on priority application based on Japanese Patent Application No. 2015-183494 filed on September 16, 2015, and Japanese Patent Application No. 2015-240357 filed on December 9.

## Claims

1. A molded product obtainable by polymerizing and curing a polymerizable composition including:

   a polyisocyanate compound (A);
   a polyol compound (B) which is represented by Formula (1), and which has a number average molecular weight of equal to or greater than 100

   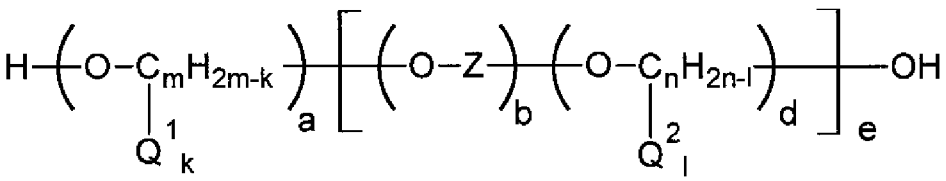

   (1)

   in Formula (1), m represents a numerical value of 1 to 20, k represents 0 to 2m, n represents a numerical value of 1 to 20, 1 represents 0 to 2n, a represents a numerical value of equal to or greater than 0, b represents a numerical value of equal to or greater than 0, d represents a numerical value of equal to or greater than 0, e represents a numerical value of equal to or greater than 1, $Q^1$ represents a hydrogen atom or an alkyl group having 1 to 6 carbon atoms, a plurality of $Q^1$'s existing together may be identical to or different from each other, $Q^2$ represents a hydrogen atom or an alkyl group having 1 to 6 carbon atoms, a plurality of $Q^2$'s existing together may be identical to or different from each other, Z represents a divalent organic group having 1 to 30 carbon atoms which may include an aromatic group, and a plurality of Z's existing together may be identical to or different from each other;
   a bifunctional or higher functional active hydrogen compound (C) having at least one SH group; and
   a photochromic compound (D),
   wherein a concentration of SH groups measured by an IR analysis method is less than 1.0 wt%.

2. A molded product according to claim 1,
   wherein the polyisocyanate compound (A) is one or more selected from the group consisting of hexamethylene diisocyanate, pentamethylene diisocyanate, xylylene diisocyanate, isophorone diisocyanate, bis(isocyanatomethyl) cyclohexane, dicyclohexylmethane diisocyanate, 2,5-bis(isocyanatomethyl) bicyclo-[2.2.1]-heptane, 2,6-bis(isocyanatomethyl) bicyclo-[2.2.1]-heptane, tolylene diisocyanate, phenylene diisocyanate, and diphenylmethane diisocyanate.

3. The molded product according to claim 1 or 2,
   wherein the polyol compound (B) is one or more compounds selected from compounds represented by Formulae (I) to (IV),

   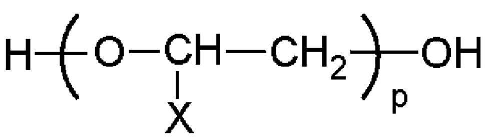

   (I)

   in Formula (I), p represents a numerical value of 4 to 100, X represents a hydrogen atom or a methyl group, and a plurality of X's existing together may be identical to or different from each other,

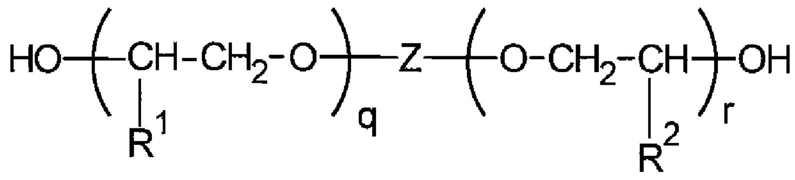

(II)

in Formula (II), q and r may be identical to or different from each other and each represent a numerical value of equal to or greater than 1, a sum of q and r represents a numerical value of 2 to 100, $R^1$ and $R^2$ may be identical to or different from each other and represent a hydrogen atom or a methyl group, each of a plurality of $R^1$'s or $R^2$'s existing together may be identical to or different from each other, and Z represents a substituted or unsubstituted divalent aromatic group or a divalent aliphatic group which may include a substituted or unsubstituted aromatic group having 1 to 20 carbon atoms,

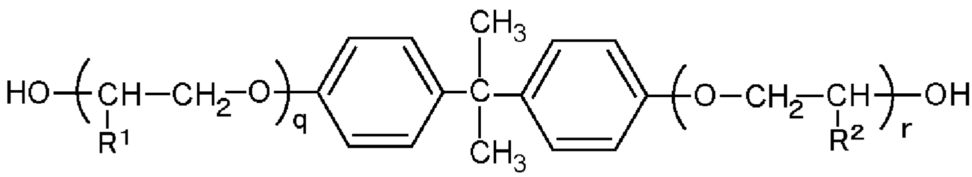

(III)

in Formula (III), q and r may be identical to or different from each other and each represent a numerical value of equal to or greater than 1, a sum of q and r represents a numerical value of 2 to 100, $R^1$ and $R^2$ may be identical to or different from each other and represent a hydrogen atom or a methyl group, each of a plurality of $R^1$'s or $R^2$'s existing together may be identical to or different from each other,

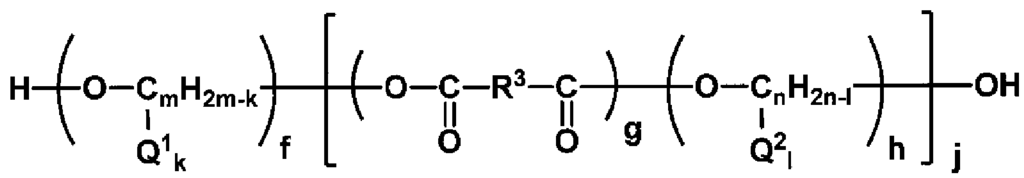

(IV)

in Formula (IV), m represents a numerical value of 1 to 20, k represents 0 to 2m, n represents a numerical value of 1 to 20, 1 represents 0 to 2n, f represents a numerical value of equal to or greater than 0, g represents a numerical value of equal to or greater than 1, h represents a numerical value of equal to or greater than 1, j represents a numerical value of equal to or greater than 1, $Q^1$ represents a hydrogen atom or an alkyl group having 1 to 6 carbon atoms, a plurality of $Q^1$'s existing together may be identical to or different from each other, $Q^2$ represents a hydrogen atom or an alkyl group having 1 to 6 carbon atoms, a plurality of $Q^2$'s existing together may be identical to or different from each other, $R^3$ represents a linear or branched alkylene group having 1 to 20 carbon atoms or a phenylene group which may have a linear or branched alkyl group having 1 to 10 carbon atoms as a substituent, and a plurality of $R^3$'s existing together may be identical to or different from each other.

**4.** The molded product according to claim 3,
wherein the polyol compound (B) is a compound represented by Formula (I), (III), or (IV).

**5.** The molded product according to claim 3 or 4,
wherein the compound represented by Formula (I) is polyethylene glycol or polypropylene glycol.

**6.** The molded product according to any one of claims 3 to 5,
wherein a number average molecular weight of the compound represented by Formula (I) is 200 to 4,000.

**7.** The molded product according to any one of claims 3 to 5,
wherein a number average molecular weight of the compound represented by Formula (I) is 300 to 3,000.

**8.** The molded product according to claim 3,
wherein a number average molecular weight of the compound represented by Formula (II) is 400 to 2,000.

**9.** The molded product according to claim 3 or 4, wherein a number average molecular weight of the compound represented by Formula (III) is 400 to 2,000.

**10.** The molded product according to claim 3 or 4, wherein a number average molecular weight of the compound represented by Formula (IV) is 600 to 3,000.

**11.** The molded product according to any one of claims 1 to 10, wherein the active hydrogen compound (C) is one or more selected from the group consisting of a polythiol compound, and a thiol compound having a hydroxy group.

**12.** The molded product according to any one of claims 1 to 11, wherein the active hydrogen compound (C) is a trifunctional or higher functional active hydrogen compound.

**13.** The molded product according to any one of claims 1 to 12, wherein the active hydrogen compound (C) is one or more selected from the group consisting of pentaerythritol tetrakis(2-mercaptoacetate), pentaerythritol tetrakis(3-mercaptopropionate), 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 1,1,3,3-tetrakis(mercaptomethylthio) propane, and trimethylolpropane tris(3-mercaptopropionate).

**14.** The molded product according to any one of claims 1 to 13, wherein the photochromic compound (D) is represented by Formula (5),

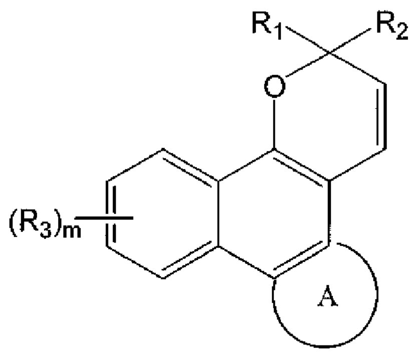

(5)

in the formula, $R_1$ and $R_2$ may be identical to or different from each other and independently represent
a hydrogen;
a linear or branched alkyl group having 1 to 12 carbon atoms;
a cycloalkyl group having 3 to 12 carbon atoms;
a substituted or unsubstituted aryl group having 6 to 24 carbon atoms or heteroaryl group having 4 to 24 carbon atoms , having, as a substituent, at least one substituent selected from a halogen atom, a hydroxy group, a linear or branched alkyl group having 1 to 12 carbon atoms, a linear or branched alkoxy group having 1 to 12 carbon atoms, a linear or branched haloalkyl group having 1 to 12 carbon atoms which is substituted with at least one halogen atom, a linear or branched haloalkoxy group having 1 to 12 carbon atoms which is substituted with at least one halogen atom, a phenoxy group or a naphthoxy group which is substituted with at least one linear or branched alkyl group or alkoxy group having 1 to 12 carbon atoms, a linear or branched alkenyl group having 2 to 12 carbon atoms, a $-NH_2$ group, a -NHR group, a $-N(R)_2$ group where R is a linear or branched alkyl group having 1 to 6 carbon atoms, and in a case where two R's exist, the two R's may be identical to or different from each other, and a methacryloyl group or an acryloyl group; and
an aralkyl or heteroaralkyl group, which group is a linear or branched alkyl group having 1 to 4 carbon atoms is substituted with the aryl group or the heteroaryl group,
$R_3$'s may be identical to or different from each other, and independently represent
a halogen atom;
a linear or branched alkyl group having 1 to 12 carbon atoms;
a cycloalkyl group having 3 to 12 carbon atoms;
a linear or branched alkoxy group having 1 to 12 carbon atoms;
a linear or branched haloalkyl group having 1 to 12 carbon atoms which is substituted with at least one halogen

atom, a halocycloalkyl group having 3 to 12 carbon atoms which is substituted with at least one halogen atom, and a linear or branched haloalkoxy group having 1 to 12 carbon atoms which is substituted with at least one halogen atom;
a substituted or unsubstituted aryl group having 6 to 24 carbon atoms or heteroaryl group having 4 to 24 carbon atoms (having as a substituent, at least one substituent selected from a halogen atom, a hydroxy group, a linear or branched alkyl group having 1 to 12 carbon atoms, a linear or branched alkoxy group having 1 to 12 carbon atoms, a linear or branched haloalkyl group having 1 to 12 carbon atoms which is substituted with at least one halogen atom, a linear or branched haloalkoxy group having 1 to 12 carbon atoms which is substituted with at least one halogen atom, a phenoxy group or a naphthoxy group which is substituted with at least one linear or branched alkyl group or alkoxy group having 1 to 12 carbon atoms, a linear or branched alkenyl group having 2 to 12 carbon atoms, and an amino group;
an aralkyl or heteroaralkyl group, which group is a linear or branched alkyl group having 1 to 4 carbon atoms is substituted with the aryl group or the heteroaryl group;
a substituted or unsubstituted phenoxy or naphthoxy group having, as a substituent, at least one substituent selected from a linear or branched alkyl group or alkoxy group having 1 to 6 carbon atoms;
$-NH_2$, -NHR, $-CONH_2$, or -CONHR
where R is a linear or branched alkyl group having 1 to 6 carbon atoms; and
$-OCOR_8$ or $-COOR_8$ where, $R_8$ is a linear or branched alkyl group having 1 to 6 carbon atoms, or a cycloalkyl group having 3 to 6 carbon atoms, or, in $R_1$ and $R_2$, a phenyl group substituted with at least one substituent of a substituted aryl or substituted heteroaryl group or an unsubstituted phenyl group),
m is an integer of 0 to 4,
A represents an annelated ring of Formula ($A_2$) or ($A_4$),

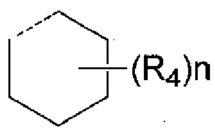

($A_2$)

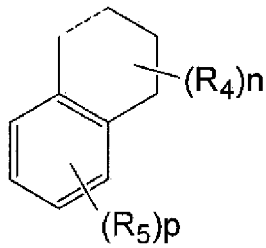

($A_4$)

in the annelated rings,

a dotted line represents a carbon $C_5$ carbon $C_6$ bond of a naphthopyran ring of Formula (5),
an $\alpha$ bond of an annelated ring ($A_4$) is able to be bonded to carbon $C_5$ or carbon $C_6$ of the naphthopyran ring of Formula (5),
$R_4$'s are identical to or different from each other, and independently represent
OH, a linear or branched alkyl group or alkoxy group having 1 to 6 carbon atoms, or two $R_4$'s form carbonyl (CO), and
$R_5$ represents
halogen;
a linear or branched alkyl group having 1 to 12 carbon atoms; a linear or branched haloalkyl group which is substituted with at least one halogen atom and which has 1 to 6 carbon atoms;
a cycloalkyl group having 3 to 12 carbon atoms;
a linear or branched alkoxy group having 1 to 6 carbon atoms;
a substituted or unsubstituted phenyl or benzyl group having, as a substituent, in a case where the $R_1$ or $R_2$ group of Formula (5) independently corresponds to an aryl or heteroaryl group, at least one of the substituents described above in definition of the $R_1$ or $R_2$ group;
$-NH_2$ and -NHR
where, R is a linear or branched alkyl group having 1 to 6 carbon atoms;
a substituted or unsubstituted phenoxy or naphthoxy group having, as a substituent, at least a linear or branched alkyl group or alkoxy group having 1 to 6 carbon atoms; and
a $-COR_9$, $-COOR_9$, or $-CONHR_9$ group where, $R_9$ represents a linear or branched alkyl group having 1 to 6 carbon atoms, a cycloalkyl group having 3 to 6 carbon atoms, or a substituted or unsubstituted phenyl or benzyl group, having, as a substituent, in a case where the $R_1$ or $R_2$ group of Formula (5) independently corresponds to an aryl or heteroaryl group, at least one of the substituents described above in the definition of the $R_1$ or $R_2$ group, and

in a case where A represents ($A_4$), n is an integer of 0 to 2, and p is an integer of 0 to 4, and in a case where A represents ($A_2$), n is an integer of 0 to 2.

**15.** The molded product according to any one of claims 1 to 14, wherein a functional group equivalent ratio (B/A) of the polyol compound (B) with respect to the polyisocyanate compound (A) is 0.02 to 0.6, and a functional group equivalent ratio (C/A) of the active hydrogen compound (C) with respect to the polyisocyanate compound (A) is 0.4 to 0.98.

**16.** An optical material formed of the molded product according to any one of claims 1 to 15.

**17.** A plastic lens formed of the molded product according to any one of claims 1 to 15.

**18.** A plastic polarized lens comprising:

a polarizing film; and
a substrate layer formed of the molded product according to any one of claims 1 to 15 formed on at least one surface of the polarizing film.

**19.** A polymerizable composition for an optical material, comprising:

a polyisocyanate compound (A);
a polyol compound (B) which is represented by Formula (1), and which has a number average molecular weight of equal to or greater than 100

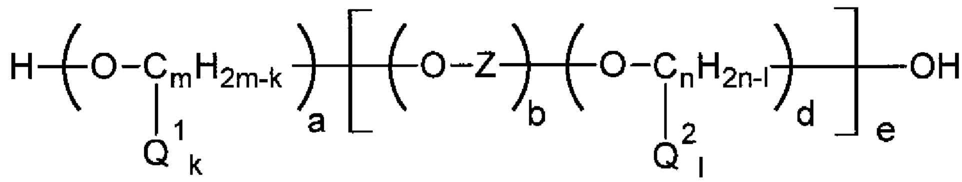

(1)

in Formula (1), m represents a numerical value of 1 to 20, k represents 0 to 2m, n represents a numerical value of 1 to 20, 1 represents 0 to 2n, a represents a numerical value of equal to or greater than 0, b represents a numerical value of equal to or greater than 0, d represents a numerical value of equal to or greater than 0, e represents a numerical value of equal to or greater than 1, $Q^1$ represents a hydrogen atom or an alkyl group having 1 to 6 carbon atoms, a plurality of $Q^1$'s existing together may be identical to or different from each other, $Q^2$ represents a hydrogen atom or an alkyl group having 1 to 6 carbon atoms, a plurality of $Q^2$'s existing together may be identical to or different from each other, Z represents a divalent organic group having 1 to 30 carbon atoms which may include an aromatic group, and a plurality of Z's existing together may be identical to or different from each other;
a bifunctional or higher functional active hydrogen compound (C) having at least one SH group; and
a photochromic compound (D),
wherein a molar ratio (NCO group / (OH group + SH group)) of NCO groups included in the polyisocyanate compound (A) with respect to a sum of OH groups and SH groups included in the active hydrogen compound (C) and the polyol compound (B)) is in a range of 1.1 to 1.6.

**20.** A method of manufacturing a plastic lens, comprising:

a step of mixing a polyisocyanate compound (A),
a polyol compound (B) which is represented by Formula (1), and which has a number average molecular weight of equal to or greater than 100

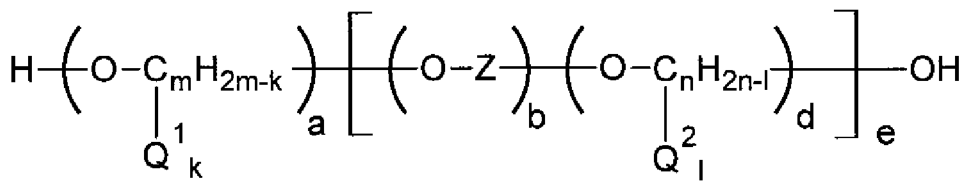

(1)

in Formula (1), m represents a numerical value of 1 to 20, k represents 0 to 2m, n represents a numerical value of 1 to 20, 1 represents 0 to 2n, a represents a numerical value of equal to or greater than 0, b represents a numerical value of equal to or greater than 0, d represents a numerical value of equal to or greater than 0, e represents a numerical value of equal to or greater than 1, $Q^1$ represents a hydrogen atom or an alkyl group having 1 to 6 carbon atoms, a plurality of $Q^1$'s existing together may be identical to or different from each other, $Q^2$ represents a hydrogen atom or an alkyl group having 1 to 6 carbon atoms, a plurality of $Q^2$'s existing together may be identical to or different from each other, Z represents a divalent organic group having 1 to 30 carbon atoms which may include an aromatic group, and a plurality of Z's existing together may be identical to or different from each other,
a bifunctional or higher functional active hydrogen compound (C) having at least one SH group, and
(D) a photochromic compound, such that a molar ratio (NCO group / (OH group + SH group)) of NCO groups included in the polyisocyanate compound (A) with respect to a sum of OH groups and SH groups included in the active hydrogen compound (C) and the polyol compound (B)) is in a range of 1.1 to 1.6, to prepare a polymerizable composition for an optical material; and
a step of casting and polymerizing the polymerizable composition for an optical material in a mold to form a lens substrate.

**21.** A method of manufacturing a plastic polarized lens, comprising:

a step of mixing a polyisocyanate compound (A),
a polyol compound (B) which is represented by Formula (1), and which has a number average molecular weight of equal to or greater than 100

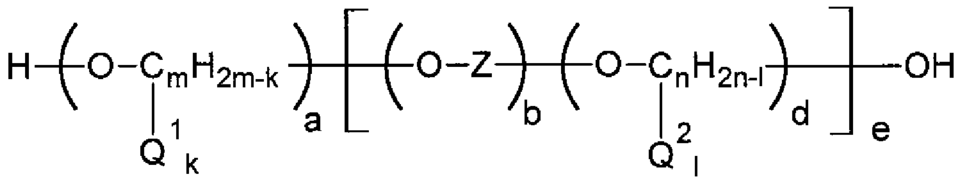

(1)

in Formula (1), m represents a numerical value of 1 to 20, k represents 0 to 2m, n represents a numerical value of 1 to 20, 1 represents 0 to 2n, a represents a numerical value of equal to or greater than 0, b represents a numerical value of equal to or greater than 0, d represents a numerical value of equal to or greater than 0, e represents a numerical value of equal to or greater than 1, $Q^1$ represents a hydrogen atom or an alkyl group having 1 to 6 carbon atoms, a plurality of $Q^1$'s existing together may be identical to or different from each other, $Q^2$ represents a hydrogen atom or an alkyl group having 1 to 6 carbon atoms, a plurality of $Q^2$'s existing together may be identical to or different from each other, Z represents a divalent organic group having 1 to 30 carbon atoms which may include an aromatic group, and a plurality of Z's existing together may be identical to or different from each other,
a bifunctional or higher functional active hydrogen compound (C) having at least one SH group, and
(D) a photochromic compound, such that a molar ratio (NCO group / (OH group + SH group)) of NCO groups included in the polyisocyanate compound (A) with respect to a sum of OH groups and SH groups included in the active hydrogen compound (C) and the polyol compound (B)) is in a range of 1.1 to 1.6, to prepare a polymerizable composition for an optical material;
a step of fixing a polarizing film to a lens casting mold in a state of being separated from a mold;
a step of injecting the polymerizable composition for an optical material to at least one of cavities formed between the polarizing film and the mold; and
a step of polymerizing and curing the polymerizable composition for an optical material and laminating a substrate layer on at least one surface of the polarizing film.

**Patentansprüche**

**1.** Formprodukt, das durch Polymerisieren und Härten einer polymerisierbaren Zusammensetzung erhältlich ist, die Folgendes umfasst:

eine Polyisocyanat-Verbindung (A);
eine Polyol-Verbindung (B) die durch Formel (1) dargestellt ist und die ein zahlenmittleres Molekulargewicht

von größer oder gleich 100 aufweist

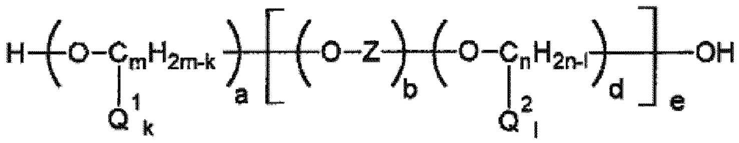

(1)

wobei in Formel (1) m für einen numerischen Wert von 1 bis 20 steht, k für 0 bis 2m steht, n für einen numerischen Wert von 1 bis 20 steht, l für 0 bis 2n steht, a für einen numerischen Wert von größer oder gleich 0 steht, b für einen numerischen Wert von größer oder gleich 0 steht, d für einen numerischen Wert von größer oder gleich 0 steht, e für einen numerischen Wert von größer oder gleich 1 steht, $Q^1$ für ein Wasserstoffatom oder eine Alkylgruppe mit 1 bis 6 Kohlenstoffatomen steht, wobei mehrere zusammen vorliegende $Q^1$ gleich oder unterschiedlich sein können, $Q^2$ für ein Wasserstoffatom oder eine Alkylgruppe mit 1 bis 6 Kohlenstoffatomen steht, wobei mehrere zusammen vorliegen $Q^2$ gleich oder unterschiedlich sein können, Z für eine zweiwertige organische Gruppe mit 1 bis 30 Kohlenstoffatomen steht, die gegebenenfalls eine aromatische Gruppe umfasst, wobei mehrere zusammen vorliegende Z' gleich oder unterschiedlich sein können;
eine bifunktionelle oder höherfunktionelle aktive Wasserstoffverbindung (C) mit zumindest einer SH-Gruppe; und eine photochrome Verbindung (D),
wobei die Konzentration von SH-Gruppen mittels IR-Analyseverfahren gemessen weniger als 1,0 Gew.-% beträgt.

**2.** Formprodukt nach Anspruch 1,
wobei die Polyisocyanat-Verbindung (A) eine oder mehrere, ausgewählt aus der aus Hexamethylendiisocyanat, Pentamethylendiisocyanat, Xylylendiisocyanat, Isophorondiisocyanat, Bis(isocyanatomethyl)cyclohexan, Dicyclohexylmethandiisocyanat, 2,5-Bis(isocyanatomethyl)bicyclo[2.2.1]heptan, 2,6-Bis(isocyanatomethyl)bicyclo[2.2.1]heptan, Tolylendiisocyanat, Phenylendiisocyanat und Diphenylmethandiisocyanat bestehenden Gruppe sind.

**3.** Formprodukt nach Anspruch 1 oder 2,
wobei die Polyol-Verbindung (B) eine oder mehrere Verbindungen, ausgewählt aus durch die Formeln (I) bis (IV) dargestellten Verbindungen sind,

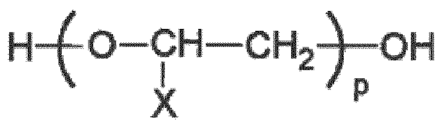

(I)

wobei in Formel (I) p für einen numerischen Wert von 4 bis 100 steht, X für ein Wasserstoffatom oder eine Methylgruppe steht und mehrere zusammen vorliegende X gleich oder unterschiedlich sein können,

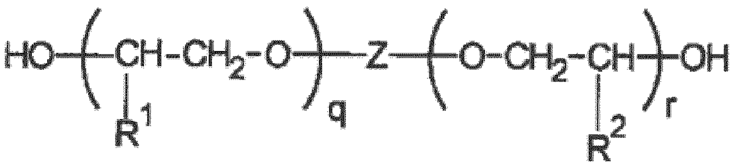

(II)

wobei in Formel (II) q und r gleich oder unterschiedlich sein können und jeweils für einen numerischen Wert von größer oder gleich 1 stehen, die Summe von q und r einen numerischen Wert von 2 bis 100 darstellt, $R^1$ und $R^2$ jeweils gleich oder unterschiedlich sein können und für ein Wasserstoffatom oder eine Methylgruppe stehen, wobei mehrere zusammen vorliegende $R^1$ oder $R^2$ jeweils gleich oder unterschiedlich sein können, und Z für eine substituierte oder unsubstituierte, zweiwertige aromatische Gruppe oder eine zweiwertige aliphatische Gruppe, die gegebenenfalls eine substituierte oder unsubstituierte aromatische Gruppe mit 1 bis 20 Kohlenstoffatomen umfasst, steht,

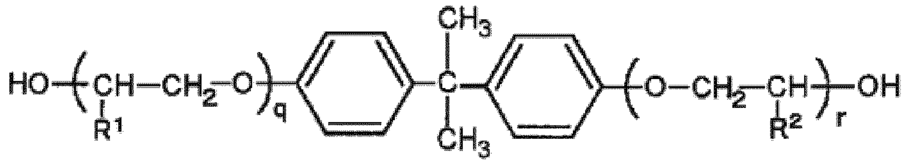

(III)

wobei in Formel (III) q und r gleich oder unterschiedlich sein können und jeweils für einen numerischen Wert von größer oder gleich 1 stehen, die Summe von q und r einen numerischen Wert von 2 bis 100 darstellt, $R^1$ und $R^2$ jeweils gleich oder unterschiedlich sein können und für ein Wasserstoffatom oder eine Methylgruppe stehen, wobei mehrere zusammen vorliegende $R^1$ oder $R^2$ jeweils gleich oder unterschiedlich sein können,

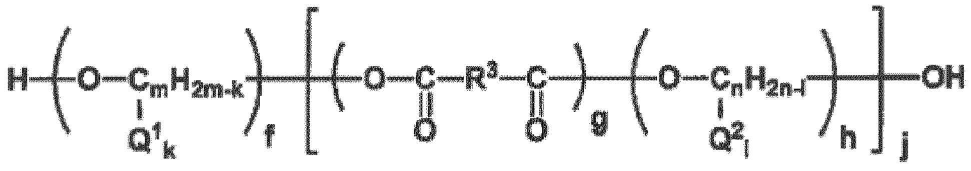

(IV)

wobei in Formel (IV) m für einen numerischen Wert von 1 bis 20 steht, k für 0 bis 2m steht, n für einen numerischen Wert von 1 bis 20 steht, l für 0 bis 2m steht, f für einen numerischen Wert von größer oder gleich 0 steht, g für einen numerischen Wert von größer oder gleich 1 steht, h für einen numerischen Wert von größer oder gleich 1 steht, j für einen numerischen Wert von größer oder gleich 1 steht, $Q^1$ für ein Wasserstoffatom oder eine Alkylgruppe mit 1 bis 6 Kohlenstoffatomen steht, wobei mehrere zusammen vorliegende $Q^1$ gleich oder unterschiedlich sein können, $Q^2$ für ein Wasserstoffatom oder eine Alkylgruppe mit 1 bis 6 Kohlenstoffatomen steht, wobei mehrere zusammen vorliegende $Q^2$ gleich oder unterschiedlich sein können, $R^3$ für eine unverzweigte oder verzweigte Alkylengruppe mit 1 bis 20 Kohlenstoffatomen oder für eine Phenylengruppe, die gegebenenfalls eine unverzweigte oder verzweigte Alkylgruppe mit 1 bis 10 Kohlenstoffatomen als Substituent aufweist, steht, wobei mehrere zusammen vorliegende $R^3$ gleich oder unterschiedlich sein können.

**4.** Formprodukt nach Anspruch 3,
wobei die Polyol-Verbindung (B) eine durch Formel (I), (III) oder (IV) dargestellte Verbindung ist.

**5.** Formprodukt nach Anspruch 3 oder 4,
wobei die durch Formel (I) dargestellte Verbindung Polyethylenglykol oder Polypropylenglykol ist.

**6.** Formprodukt nach einem der Ansprüche 3 bis 5,
wobei das zahlenmittlere Molekulargewicht der durch Formel (I) dargestellten Verbindung 200 bis 4.000 beträgt.

**7.** Formprodukt nach einem der Ansprüche 3 bis 5,
wobei das zahlenmittlere Molekulargewicht der durch Formel (I) dargestellten Verbindung 300 bis 3.000 beträgt.

**8.** Formprodukt nach Anspruch 3,
wobei das zahlenmittlere Molekulargewicht der durch Formel (II) dargestellten Verbindung 400 bis 2.000 beträgt.

**9.** Formprodukt nach Anspruch 3 oder 4,
wobei das zahlenmittlere Molekulargewicht der durch Formel (III) dargestellten Verbindung 400 bis 2.000 beträgt.

**10.** Formprodukt nach Anspruch 3 oder 4,
wobei das zahlenmittlere Molekulargewicht der durch Formel (IV) dargestellten Verbindung 600 bis 3.000 beträgt.

**11.** Formprodukt nach einem der Ansprüche 1 bis 10,
wobei die aktive Wasserstoffverbindung (C) eine oder mehrere, ausgewählt aus der aus einer Polythiol-Verbindung und einer Thiol-Verbindung mit einer Hydroxygruppe bestehenden Gruppe sind.

**12.** Formprodukt nach einem der Ansprüche 1 bis 11,
wobei die aktive Wasserstoffverbindung (C) eine trifunktionelle oder höherfunktionelle aktive Wasserstoffverbindung ist.

**13.** Formprodukt nach einem der Ansprüche 1 bis 12,
wobei die aktive Wasserstoffverbindung (C) eine oder mehrere, ausgewählt aus der aus Pentaerythrit-tetrakis(2-mercaptoacetat), Pentaerythrit-tetrakis(3-mercaptopropionat), 4-Mercaptomethyl-1,8-dimercapto-3,6-dithiaoctan, 5,7-Dimercaptomethyl-1,11-dimercapto-3,6,9-trithiaundecan, 4,7-Dimercaptomethyl-1,11-dimercapto-3,6,9-trithiaundecan, 4,8-Dimercaptomethyl-1,11-dimercapto-3,6,9-thrithiaundecan, 1,1,3,3,-Tetrakis(mercaptomethylthio)propan und Trimethylolpropan-tris(3-mercaptopropionat) bestehenden Gruppe sind.

**14.** Formprodukt nach einem der Ansprüche 1 bis 13,
wobei die photochrome Verbindung (D) durch Formel (5) dargestellt ist:

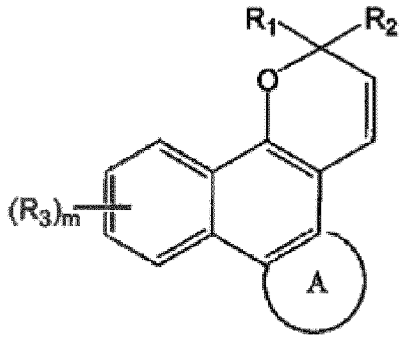

(5)

wobei in der Formel $R_1$ und $R_2$ jeweils gleich oder unterschiedlich sein können und jeweils für

ein Wasserstoffatom,
eine unverzweigte oder verzweigte Alkylgruppe mit 1 bis 12 Kohlenstoffatomen,
eine Cycloalkylgruppe mit 3 bis 12 Kohlenstoffatomen,
eine substituierte oder unsubstituierte Arylgruppe mit 6 bis 24 Kohlenstoffatomen oder Heteroarylgruppe mit 4 bis 24 Kohlenstoffatomen, die als Substituent zumindest einen Substituenten aufweist, der aus einem Halogenatom, einer Hydroxygruppe, einer unverzweigten oder verzweigten Alkylgruppe mit 1 bis 12 Kohlenstoffatomen, einer unverzweigten oder verzweigten Alkoxygruppe mit 1 bis 12 Kohlenstoffatomen, einer unverzweigten oder verzweigten Halogenalkylgruppe mit 1 bis 12 Kohlenstoffatomen, die mit zumindest einem Halogenatom substituiert ist, einer unverzweigten oder verzweigten Halogenalkoxygruppe mit 1 bis 12 Kohlenstoffatomen, die mit zumindest einem Halogenatom substituiert ist, einer Phenoxygruppe oder Naphthoxygruppe, die mit zumindest einer unverzweigten oder verzweigten Alkylgruppe oder Alkoxygruppe mit 1 bis 12 Kohlenstoffatomen substituiert ist, einer unverzweigten oder verzweigten Alkenylgruppe mit 2 bis 12 Kohlenstoffatomen, einer Gruppe $-NH_2$, einer Gruppe -NHR, einer Gruppe $-N(R)_2$, worin R eine unverzweigte oder verzweigte Alkylgruppe mit 1 bis 6 Kohlenstoffatomen ist, und in Fällen, in denen zwei R' vorliegen, die zwei R' gleich oder unterschiedlich sein können, einer Methacryloylgruppe und einer Acryloylgruppe ausgewählt ist, und
eine Aralkyl- oder Heteroaralkylgruppe stehen, wobei die Gruppe eine unverzweigte oder verzweigte Alkylgruppe mit 1 bis 4 Kohlenstoffatomen ist, die mit der Arylgruppe oder der Heteroarylgruppe substituiert ist;
die $R_3$' jeweils gleich oder unterschiedlich sein können und jeweils unabhängig für Folgendes stehen:

ein Halogenatom,
eine unverzweigte oder verzweigte Alkylgruppe mit 1 bis 12 Kohlenstoffatomen,
eine Cycloalkylgruppe mit 3 bis 12 Kohlenstoffatomen,
eine unverzweigte oder verzweigte Alkoxygruppe mit 1 bis 12 Kohlenstoffatomen,
eine unverzweigte oder verzweigte Halogenalkylgruppe mit 1 bis 12 Kohlenstoffatomen, die mit zumindest einem Halogenatom substituiert ist, eine Halogencycloalkylgruppe mit 3 bis 12 Kohlenstoffatomen, die mit zumindest einem Halogenatom substituiert ist, und eine unverzweigte oder verzweigte Halogenalkoxygruppe mit 1 bis 12 Kohlenstoffatomen, die mit zumindest einem Halogenatom substituiert ist,
eine substituierte oder unsubstituierte Arylgruppe mit 6 bis 24 Kohlenstoffatomen oder Heteroarylgruppe mit 4 bis 24 Kohlenstoffatomen, die als Substituent zumindest einen Substituenten aufweist, der aus einem Halogenatom, einer Hydroxygruppe, einer unverzweigten oder verzweigten Alkylgruppe mit 1 bis 12 Kohlenstoffatomen, einer unverzweigten oder verzweigten Alkoxygruppe mit 1 bis 12 Kohlenstoffatomen, einer unverzweigten oder verzweigten Halogenalkylgruppe mit 1 bis 12 Kohlenstoffatomen, die mit zumindest einem Halogenatom substituiert ist, einer unverzweigten oder verzweigten Halogenalkoxygruppe mit 1 bis 12 Kohlenstoffatomen, die mit zumindest einem Halogenatom substituiert ist, einer Phenoxygruppe oder

Naphthoxygruppe, die mit zumindest einer unverzweigten oder verzweigten Alkylgruppe oder Alkoxygruppe mit 1 bis 12 Kohlenstoffatomen substituiert ist, einer unverzweigten oder verzweigten Alkenylgruppe mit 2 bis 12 Kohlenstoffatomen und einer Aminogruppe ausgewählt ist,
eine Aralkyl- oder Heteroaralkylgruppe, wobei die Gruppe eine unverzweigte oder verzweigte Alkylgruppe mit 1 bis 4 Kohlenstoffatomen ist, die mit der Arylgruppe oder der Heteroarylgruppe substituiert ist,
eine substituierte oder unsubstituierte Phenoxy- oder Naphthoxygruppe, die als Substituenten zumindest einen Substituenten aufweist, der aus einer unverzweigten oder verzweigten Alkylgruppe oder Alkoxygruppe mit 1 bis 6 Kohlenstoffatomen ausgewählt ist,
$-NH_2$, -NHR, $-CONH_2$ oder -CONHR,
worin R eine unverzweigte oder verzweigte Alkylgruppe mit 1 bis 6 Kohlenstoffatomen ist, und
$-OCOR_3$ oder $-COOR_8$, worin $R_8$ eine unverzweigte oder verzweigte Alkylgruppe mit 1 bis 6 Kohlenstoffatomen oder eine Cycloalkylgruppe mit 3 bis 6 Kohlenstoffatomen oder, in $R_1$ und $R_2$, eine Phenylgruppe, die mit zumindest einem Substituenten einer substituierten Aryl- oder substituierten Heteroarylgruppe substituiert ist, oder eine unsubstituierte Phenylgruppe ist;
m eine ganze Zahl von 0 bis 4 ist;
A für einen kondensierten Ring der Formel ($A_2$) oder ($A_4$) steht,

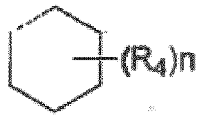
($A_2$)

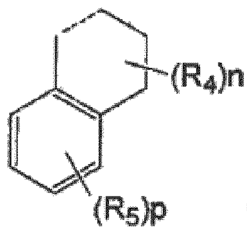
($A_4$)

worin in den kondensierten Ringen:

die gepunktete Linie für eine Kohlenstoff-$C_5$-Kohlenstoff-$C_6$-Bindung eines Naphthopyran-Rings der Formel (5) steht,
die $\alpha$-Bindung des kondensierten Rings ($A_4$) gegebenenfalls an den Kohlenstoff $C_5$ oder den Kohlenstoff $C_6$ des Naphthopyranrings der Formel (5) gebunden ist,
die $R_4$' gleich oder unterschiedlich sein können und jeweils unabhängig für Folgendes stehen:

OH, eine unverzweigte oder verzweigte Alkylgruppe oder Alkoxygruppe mit 1 bis 6 Kohlenstoffatomen, oder zwei $R_4$' bilden ein Carbonyl (CO), und
$R_5$ für Folgendes steht:

Halogen,
eine unverzweigte oder verzweigte Alkylgruppe mit 1 bis 12 Kohlenstoffatomen,
eine unverzweigte oder verzweigte Halogenalkylgruppe, die mit zumindest einem Halogenatom substituiert ist und 1 bis 6 Kohlenstoffatome aufweist,
eine Cycloalkylgruppe mit 3 bis 12 Kohlenstoffatomen,
eine unverzweigte oder verzweigte Alkoxygruppe mit 1 bis 6 Kohlenstoffatomen,
eine substituierte oder unsubstituierte Phenyl- oder Benzylgruppe, die als Substituenten zumindest einen der oben in der Definition der Gruppe $R_1$ oder $R_2$ beschriebenen Substituenten aufweist, falls die Gruppe $R_1$ oder $R_2$ der Formel (5) jeweils unabhängig einer Aryl- oder Heteroarylgruppe entspricht,
$-NH_2$ und -NHR,
worin R eine unverzweigte oder verzweigte Alkylgruppe mit 1 bis 6 Kohlenstoffatomen ist,
eine substituierte oder unsubstituierte Phenoxy- oder Naphthoxygruppe, die als Substituenten zumindest eine unverzweigte oder verzweigte Alkylgruppe oder Alkoxygruppe mit 1 bis 6 Kohlenstoffatomen aufweist, und
eine Gruppe $-COR_9$, $-COOR_9$ oder $-CONHR_9$, worin $R_9$ für eine unverzweigte oder verzweigte Alkylgruppe mit 1 bis 6 Kohlenstoffatomen, eine Cycloalkylgruppe mit 3 bis 6 Kohlenstoffatomen oder eine substituierte oder unsubstituierte Phenyl- oder Benzylgruppe steht, die als Substituenten zumindest einen der oben in der Definition der Gruppe $R_1$ oder $R_2$ beschriebenen Substituenten aufweist, falls die Gruppe $R_1$ oder $R_2$ der Formel (5) jeweils unabhängig einer Aryl- oder Heteroarylgruppe entspricht, und

falls A für ($A_4$) steht, n eine ganze Zahl von 0 bis 2 ist und p eine ganze Zahl von 0 bis 4 ist, und falls A für ($A_2$) steht, n eine ganze Zahl von 0 bis 2 ist.

**15.** Formprodukt nach einem der Ansprüche 1 bis 14, wobei das Äquivalentverhältnis (B/A)zwischen den funktionellen Gruppen der Polyol-Verbindung (B) und der Polyisocyanat-Verbindung (A) 0,02 bis 0,6 beträgt und das Äquivalentverhältnis (C/A) zwischen den funktionellen Gruppen der aktiven Wasserstoffverbindung (C) und der Polyisocyanat-Verbindung (A) 0,4 bis 0,98 beträgt.

**16.** Optisches Material, das aus einem Formprodukt nach einem der Ansprüche 1 bis 15 gebildet ist.

**17.** Kunststofflinse, die aus einem Formprodukt nach einem der Ansprüche 1 bis 15 gebildet ist.

**18.** Polarisierte Kunststofflinse, die Folgendes umfasst:

eine polarisierende Folie und
eine Substratschicht, die aus einem Formprodukt nach einem der Ansprüche 1 bis 15 gebildet ist und die auf zumindest einer Oberfläche des polarisierenden Films ausgebildet ist.

**19.** Polymerisierbare Zusammensetzung für ein optisches Material, die Folgendes umfasst:

eine Polyisocyanat-Verbindung (A);
eine Polyol-Verbindung (B), die durch Formel (1) dargestellt ist und die ein zahlenmittleres Molekulargewicht von größer oder gleich 100 aufweist:

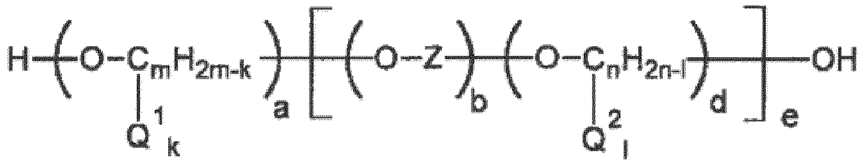

(1)

wobei in Formel (1) m für einen numerischen Wert von 1 bis 20 steht, k für 0 bis 2m steht, n für einen numerischen Wert von 1 bis 20 steht, l für 0 bis 2n steht, a für einen numerischen Wert von größer oder gleich 0 steht, b für einen numerischen Wert von größer oder gleich 0 steht, d für einen numerischen Wert von größer oder gleich 0 steht, e für einen numerischen Wert von größer oder gleich 1 steht, $Q^1$ für ein Wasserstoffatom oder eine Alkylgruppe mit 1 bis 6 Kohlenstoffatomen steht, wobei mehrere zusammen vorliegende $Q^1$ gleich oder unterschiedlich sein können, $Q^2$ für ein Wasserstoffatom oder eine Alkylgruppe mit 1 bis 6 Kohlenstoffatomen steht, wobei mehrere zusammen vorliegende $Q^2$ gleich oder unterschiedlich sein können, Z für eine zweiwertige organische Gruppe mit 1 bis 30 Kohlenstoffatomen steht, die gegebenenfalls eine aromatische Gruppe umfasst, wobei mehrere zusammen vorliegende Z' gleich oder unterschiedlich sein können;
eine bifunktionelle oder höherfunktionelle aktive Wasserstoffverbindung (C) mit zumindest einer SH-Gruppe; und eine photochrome Verbindung (D);
wobei das Molverhältnis (NCO-Gruppen/(OH-Gruppen + SH-Gruppen)) zwischen in der Polyisocyanat-Verbindung (A) enthaltenen NCO-Gruppen und der Summe der in der aktiven Wasserstoffverbindung (C) und der Polyol-Verbindung (B) enthaltenen OH-Gruppen und SH-Gruppen im Bereich von 1,1 bis 1,6 liegt.

**20.** Verfahren zur Herstellung einer Kunststofflinse, das Folgendes umfasst:

einen Schritt des Vermischens einer Polyisocyanat-Verbindung (A), einer Polyol-Verbindung (B), die durch Formel (1) dargestellt ist und die ein zahlenmittleres Molekulargewicht von größer oder gleich 100 aufweist:

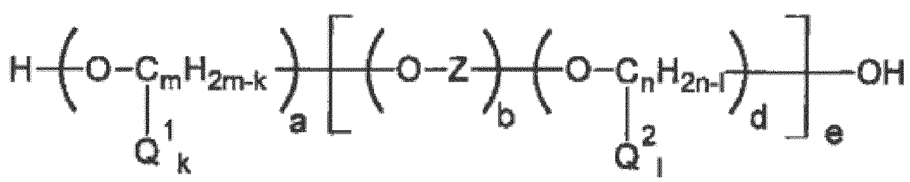

(1)

wobei in Formel (1) m für einen numerischen Wert von 1 bis 20 steht, k für 0 bis 2m steht, n für einen numerischen Wert von 1 bis 20 steht, I für 0 bis 2n steht, a für einen numerischen Wert von größer oder gleich 0 steht, b für einen numerischen Wert von größer oder gleich 0 steht, d für einen numerischen Wert von größer oder gleich 0 steht, e für einen numerischen Wert von größer oder gleich 1 steht, $Q^1$ für ein Wasserstoffatom oder eine Alkylgruppe mit 1 bis 6 Kohlenstoffatomen steht, wobei mehrere zusammen vorliegende $Q^1$ gleich oder unterschiedlich sein können, $Q^2$ für ein Wasserstoffatom oder eine Alkylgruppe mit 1 bis 6 Kohlenstoffatomen steht, wobei mehrere zusammen vorliegende $Q^2$ gleich oder unterschiedlich sein können, Z für eine zweiwertige organische Gruppe mit 1 bis 30 Kohlenstoffatomen steht, die gegebenenfalls eine aromatische Gruppe umfasst, wobei mehrere zusammen vorliegende Z' gleich oder unterschiedlich sein können,
einer bifunktionellen oder höherfunktionellen aktiven Wasserstoffverbindung (C) mit zumindest einer SH-Gruppe und
(D) einer photochromen Verbindung, so dass das Molverhältnis (NCO-Gruppen/(OH-Gruppen + SH-Gruppen)) zwischen in der Polyisocyanat-Verbindung (A) enthaltenen NCO-Gruppen und der Summe von in der aktiven Wasserstoffverbindung (C) und der Polyol-Verbindung (B) enthaltenen OH-Gruppen und SH-Gruppen im Bereich von 1,1 bis 1,6 liegt, um eine polymerisierbare Zusammensetzung für ein optisches Material herzustellen; und
einen Schritt des Gießens und Polymerisierens der polymerisierbaren Zusammensetzung für ein optisches Material in einer Form, um ein Linsensubstrat zu bilden.

**21.** Verfahren zur Herstellung einer polarisierten Kunststofflinse, das Folgendes umfasst:

einen Schritt des Vermischens einer Polyisocyanat-Verbindung (A),
einer Polyol-Verbindung (B), die durch Formel (1) dargestellt ist und die ein zahlenmittleres Molekulargewicht von größer oder gleich 100 aufweist:

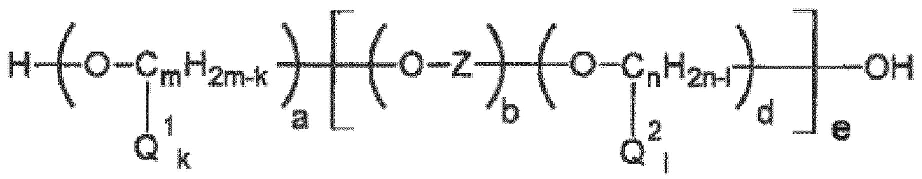

(1)

wobei in Formel (1) m für einen numerischen Wert von 1 bis 20 steht, k für 0 bis 2m steht, n für einen numerischen Wert von 1 bis 20 steht, I für 0 bis 2n steht, a für einen numerischen Wert von größer oder gleich 0 steht, b für einen numerischen Wert von größer oder gleich 0 steht, d für einen numerischen Wert von größer oder gleich 0 steht, e für einen numerischen Wert von größer oder gleich 1 steht, $Q^1$ für ein Wasserstoffatom oder eine Alkylgruppe mit 1 bis 6 Kohlenstoffatomen steht, wobei mehrere zusammen vorliegende $Q^1$ gleich oder unterschiedlich sein können, $Q^2$ für ein Wasserstoffatom oder eine Alkylgruppe mit 1 bis 6 Kohlenstoffatomen steht, wobei mehrere zusammen vorliegende $Q^2$ gleich oder unterschiedlich sein können, Z für eine zweiwertige organische Gruppe mit 1 bis 30 Kohlenstoffatomen steht, die gegebenenfalls eine aromatische Gruppe umfasst, wobei mehrere zusammen vorliegende Z' gleich oder unterschiedlich sein können,
einer bifunktionellen oder höherfunktionellen aktiven Wasserstoffverbindung (C) mit zumindest einer SH-Gruppe und
(D) einer photochromen Verbindung, so dass das Molverhältnis (NCO-Gruppen/(OH-Gruppen + SH-Gruppen)) zwischen in der Polyisocyanat-Verbindung (A) enthaltenen NCO-Gruppen und der Summe von in der aktiven Wasserstoffverbindung (C) und der Polyol-Verbindung (B) enthaltenen OH-Gruppen und SH-Gruppen im Bereich von 1,1 bis 1,6 liegt, um eine polymerisierbare Zusammensetzung für ein optisches Material herzustellen;
einen Schritt des Fixierens einer polarisierenden Folie an einer Linsen-Gussform in einem Zustand, in dem diese von der Form getrennt ist;
einen Schritt des Einspritzens der polymerisierbaren Zusammensetzung für ein optisches Material in zumindest einen der zwischen der polarisierenden Folie und der Form bestehenden Hohlräume; und
einen Schritt des Polymerisierens und Härtens der polymerisierbaren Zusammensetzung für ein optisches Material und des Auflaminierens einer Substratschicht auf zumindest eine Oberfläche der polarisierenden Folie.

**Revendications**

**1.** Produit moulé pouvant être obtenu par polymérisation et durcissement d'une composition polymérisable contenant :

un composé polyisocyanate (A) ;
un composé polyol (B) qui est représenté par la formule (1), et qui a une masse moléculaire moyenne en nombre égale ou supérieure à 100

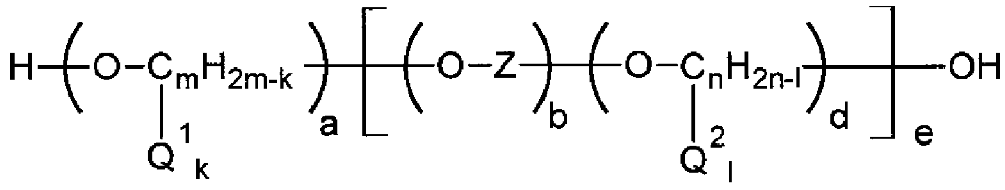

(1)

dans la formule (1), m représente une valeur numérique de 1 à 20, k vaut de 0 à 2m, n représente une valeur numérique de 1 à 20, l vaut de 0 à 2n, a représente une valeur numérique égale ou supérieure à 0, b représente une valeur numérique égale ou supérieure à 0, d représente une valeur numérique égale ou supérieure à 0, e représente une valeur numérique égale ou supérieure à 1, $Q^1$ représente un atome d'hydrogène ou un groupe alkyle ayant 1 à 6 atomes de carbone, plusieurs $Q^1$ existant ensemble peuvent être identiques ou différents, $Q^2$ représente un atome d'hydrogène ou un groupe alkyle ayant 1 à 6 atomes de carbone, plusieurs $Q^2$ existant ensemble peuvent être identiques ou différents, Z représente un groupe organique divalent ayant 1 à 30 atomes de carbone qui peut contenir un groupe aromatique, et plusieurs Z existant ensemble peuvent être identiques ou différents ;
un composé d'hydrogène actif bifonctionnel ou de fonctionnalité supérieure (C) ayant au moins un groupe SH ; et un composé photochrome (D),
dans lequel la concentration de groupes SH, mesurée par un procédé d'analyse IR, est inférieure à 1,0 % en poids.

**2.** Produit moulé selon la revendication 1, dans lequel le composé polyisocyanate (A) est un ou plusieurs choisis dans l'ensemble constitué par le diisocyanate d'hexaméthylène, le diisocyanate de pentaméthylène, le diisocyanate de xylylène, le diisocyanate d'isophorone, le bis(isocyanatométhyl)cyclohexane, le diisocyanate de dicyclohexylméthane, le 2,5-bis(isocyanatométhyl)bicyclo-[2.2.1]-heptane, le 2,6-bis(isocyanatométhyl)bicyclo-[2.2.1]-heptane, le diisocyanate de tolylène, le diisocyanate de phénylène, et le diisocyanate de diphénylméthane.

**3.** Produit moulé selon la revendication 1 ou 2, dans lequel le composé polyol (B) est un ou plusieurs composés choisis parmi les composés représentés par les formules (I) à (IV),

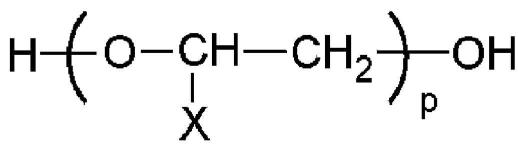

(I)

dans la formule (I), p représente une valeur numérique de 4 à 100, X représente un atome d'hydrogène ou un groupe méthyle, et plusieurs X existant ensemble peuvent être identiques ou différents,

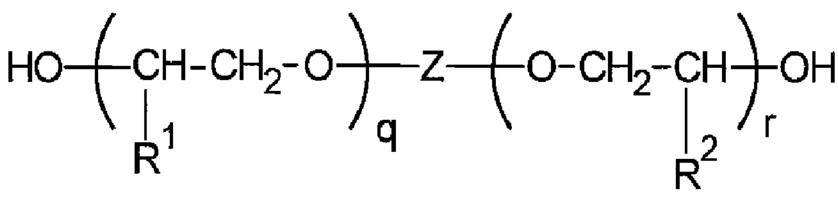

(II)

dans la formule (II), q et r peuvent être identiques ou différents et représentent chacun une valeur numérique égale ou supérieure à 1, la somme de q et r représente une valeur numérique de 2 à 100, $R^1$ et $R^2$ peuvent être identiques

ou différents et représentent un atome d'hydrogène ou un groupe méthyle, plusieurs $R^1$ ou $R^2$ existant ensemble peuvent être identiques ou différents, et Z représente un groupe aromatique divalent substitué ou non substitué ou un groupe aliphatique divalent qui peut contenir un groupe aromatique substitué ou non substitué ayant 1 à 20 atomes de carbone,

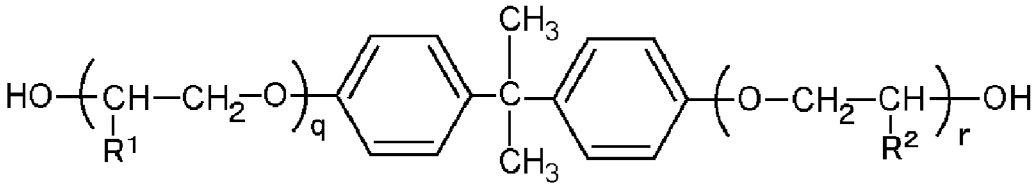

(III)

dans la formule (III), q et r peuvent être identiques ou différents et représentent chacun une valeur numérique égale ou supérieure à 1, la somme de q et r représente une valeur numérique de 2 à 100, $R^1$ et $R^2$ peuvent être identiques ou différents et représentent un atome d'hydrogène ou un groupe méthyle, plusieurs $R^1$ ou $R^2$ existant ensemble peuvent être identiques ou différents,

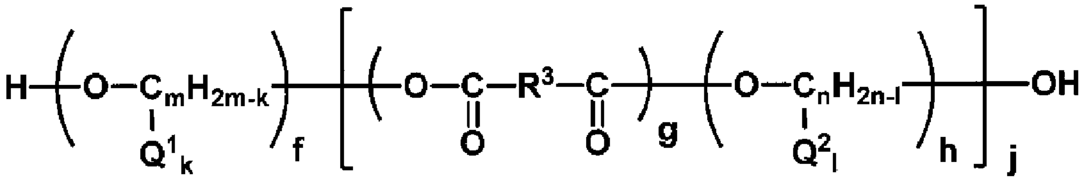

(IV)

dans la formule (IV), m représente une valeur numérique de 1 à 20, k vaut de 0 à 2m, n représente une valeur numérique de 1 à 20, l vaut de 0 à 2n, f représente une valeur numérique égale ou supérieure à 0, g représente une valeur numérique égale ou supérieure à 1, h représente une valeur numérique égale ou supérieure à 1, j représente une valeur numérique égale ou supérieure à 1, $Q^1$ représente un atome d'hydrogène ou un groupe alkyle ayant 1 à 6 atomes de carbone, plusieurs $Q^1$ existant ensemble peuvent être identiques ou différents, $Q^2$ représente un atome d'hydrogène ou un groupe alkyle ayant 1 à 6 atomes de carbone, plusieurs $Q^2$ existant ensemble peuvent être identiques ou différents, $R^3$ représente un groupe alkylène linéaire ou ramifié ayant 1 à 20 atomes de carbone ou un groupe phénylène qui peut avoir un groupe alkyle linéaire ou ramifié ayant 1 à 10 atomes de carbone en tant que substituant, et plusieurs $R^3$ existant ensemble peuvent être identiques ou différents.

4. Produit moulé selon la revendication 3, dans lequel le composé polyol (B) est un composé représenté par la formule (I), (III) ou (IV).

5. Produit moulé selon la revendication 3 ou 4, dans lequel le composé représenté par la formule (I) est le polyéthylèneglycol ou le polypropylèneglycol.

6. Produit moulé selon l'une quelconque des revendications 3 à 5, dans lequel la masse moléculaire moyenne en nombre du composé représenté par la formule (I) est de 200 à 4 000.

7. Produit moulé selon l'une quelconque des revendications 3 à 5, dans lequel la masse moléculaire moyenne en nombre du composé représenté par la formule (I) est de 300 à 3 000.

8. Produit moulé selon la revendication 3, dans lequel la masse moléculaire moyenne en nombre du composé représenté par la formule (II) est de 400 à 2 000.

9. Produit moulé selon la revendication 3 ou 4, dans lequel la masse moléculaire moyenne en nombre du composé représenté par la formule (III) est de 400 à 2 000.

10. Produit moulé selon la revendication 3 ou 4, dans lequel la masse moléculaire moyenne en nombre du composé représenté par la formule (IV) est de 600 à 3 000.

**11.** Produit moulé selon l'une quelconque des revendications 1 à 10, dans lequel le composé d'hydrogène actif (C) est un ou plusieurs choisis dans l'ensemble constitué par un composé polythiol et un composé thiol ayant un groupe hydroxy.

**12.** Produit moulé selon l'une quelconque des revendications 1 à 11, dans lequel le composé d'hydrogène actif (C) est un composé d'hydrogène actif trifonctionnel ou de fonctionnalité supérieure.

**13.** Produit moulé selon l'une quelconque des revendications 1 à 12, dans lequel le composé d'hydrogène actif (C) est un ou plusieurs choisis dans l'ensemble constitué par le tétrakis(2-mercaptoacétate) de pentaérythritol, le tétrakis(3-mercaptopropionate) de pentaérythritol, le 4-mercaptométhyl-1,8-dimercapto-3,6-dithiaoctane, le 5,7-dimercaptométhyl-1,1-dimercapto-3,6,9-trithiaundécane, le 4,7-dimercaptométhyl-1,1-dimercapto-3,6,9-trithiaundécane, le 4,8-dimercaptométhyl-1,1-dimercapto-3,6,9-trithiaundécane, le 1,1,3,3-tétrakis(mercaptométhylthio)propane, et le tris(3-mercaptopropionate) de triméthylolpropane.

**14.** Produit moulé selon l'une quelconque des revendications 1 à 13, dans lequel le composé photochrome (D) est représenté par la formule (5),

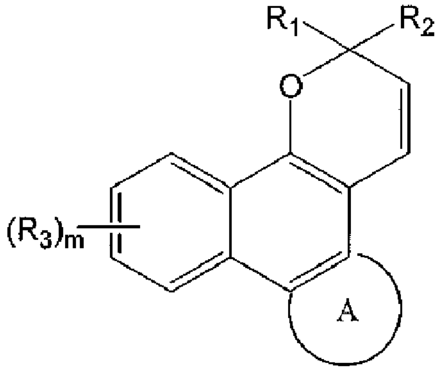

(5)

dans la formule, $R_1$ et $R_2$ peuvent être identiques ou différents et représentent indépendamment

un hydrogène ;
un groupe alkyle linéaire ou ramifié ayant 1 à 12 atomes de carbone ;
un groupe cycloalkyle ayant 3 à 12 atomes de carbone ;
un groupe aryle ayant 6 à 24 atomes de carbone ou un groupe hétéroaryle ayant 4 à 24 atomes de carbone, substitué ou non substitué, ayant, en tant que substituant, au moins un substituant choisi parmi un atome d'halogène, un groupe hydroxy, un groupe alkyle linéaire ou ramifié ayant 1 à 12 atomes de carbone, un groupe alcoxy linéaire ou ramifié ayant 1 à 12 atomes de carbone, un groupe halogénoalkyle linéaire ou ramifié ayant 1 à 12 atomes de carbone qui est substitué par au moins un atome d'halogène, un groupe halogénoalcoxy linéaire ou ramifié ayant 1 à 12 atomes de carbone qui est substitué par au moins un atome d'halogène, un groupe phénoxy ou un groupe naphtoxy qui est substitué par au moins un groupe alkyle ou groupe alcoxy linéaire ou ramifié ayant 1 à 12 atomes de carbone, un groupe alcényle linéaire ou ramifié ayant 2 à 12 atomes de carbone, un groupe $-NH_2$, un groupe -NHR, un groupe $-N(R)_2$ où R est un groupe alkyle linéaire ou ramifié ayant 1 à 6 atomes de carbone, et, dans le cas où deux R existent, les deux R peuvent être identiques ou différents, et un groupe méthacryloyle ou un groupe acryloyle ; et
un groupe aralkyle ou hétéroaralkyle, lequel groupe est un groupe alkyle linéaire ou ramifié ayant 1 à 4 atomes de carbone substitué par le groupe aryle ou le groupe hétéroaryle,
les $R_3$ peuvent être identiques ou différents, et représentent indépendamment
un atome d'halogène ;
un groupe alkyle linéaire ou ramifié ayant 1 à 12 atomes de carbone ;
un groupe cycloalkyle ayant 3 à 12 atomes de carbone ;
un groupe alcoxy linéaire ou ramifié ayant 1 à 12 atomes de carbone ;
un groupe halogénoalkyle linéaire ou ramifié ayant 1 à 12 atomes de carbone qui est substitué par au moins un atome d'halogène, un groupe halogénocycloalkyle ayant 3 à 12 atomes de carbone qui est substitué par au moins un atome d'halogène, et un groupe halogénoalcoxy linéaire ou ramifié ayant 1 à 12 atomes de carbone

qui est substitué par au moins un atome d'halogène ;
un groupe aryle ayant 6 à 24 atomes de carbone ou un groupe hétéroaryle ayant 4 à 24 atomes de carbone, substitué ou non substitué (ayant en tant que substituant au moins un substituant choisi parmi un atome d'halogène, un groupe hydroxy, un groupe alkyle linéaire ou ramifié ayant 1 à 12 atomes de carbone, un groupe alcoxy linéaire ou ramifié ayant 1 à 12 atomes de carbone, un groupe halogénoalkyle linéaire ou ramifié ayant 1 à 12 atomes de carbone qui est substitué par au moins un atome d'halogène, un groupe halogénoalcoxy linéaire ou ramifié ayant 1 à 12 atomes de carbone qui est substitué par au moins un atome d'halogène, un groupe phénoxy ou un groupe naphtoxy qui est substitué par au moins un groupe alkyle ou groupe alcoxy linéaire ou ramifié ayant 1 à 12 atomes de carbone, un groupe alcényle linéaire ou ramifié ayant 2 à 12 atomes de carbone, et un groupe amino ;
un groupe aralkyle ou hétéroaralkyle, lequel groupe est un groupe alkyle linéaire ou ramifié ayant 1 à 4 atomes de carbone qui est substitué par le groupe aryle ou le groupe hétéroaryle ;
un groupe phénoxy ou un groupe naphtoxy, substitué ou substitué, ayant en tant que substituant au moins un substituant choisi parmi un groupe alkyle ou groupe alcoxy linéaire ou ramifié ayant 1 à 6 atomes de carbone ;
$-NH_2$, -NHR, $-CONH_2$, ou -CONHR
où R est un groupe alkyle linéaire ou ramifié ayant 1 à 6 atomes de carbone ; et
$-OCOR_8$ ou $-COOR_8$ où $R_8$ est un groupe alkyle linéaire ou ramifié ayant 1 à 6 atomes de carbone, ou un groupe cycloalkyle ayant 3 à 6 atomes de carbone ou, dans $R_1$ et $R_2$, un groupe phényle substitué par au moins un substituant d'un groupe aryle substitué ou hétéroaryle substitué ou un groupe phényle non substitué);
m est un entier de 0 à 4,
A représente un cycle condensé de formule ($A_2$) ou ($A_4$),

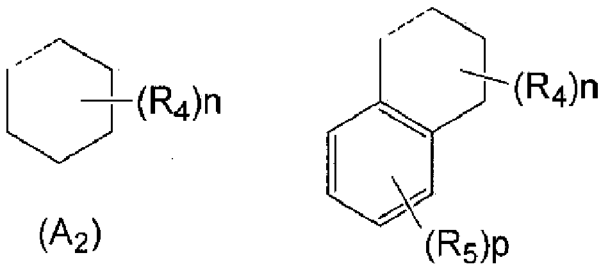

($A_2$) ($A_4$)

dans les cycles condensés,

une ligne de tirets représente une liaison du carbone $C_5$ au carbone $C_6$ d'un cycle naphtopyrane de formule (5),
une liaison α d'un cycle condensé ($A_4$) est capable d'être liée au carbone $C_5$ ou au carbone $C_6$ du cycle naphtopyrane de formule (5),
les $R_4$ sont identiques ou différents et représentent indépendamment
OH, un groupe alkyle ou groupe alcoxy linéaire ou ramifié ayant 1 à 6 atomes de carbone, ou bien deux $R_4$ forment un carbonyle (CO), et
$R_5$ représente
un halogène ;
un groupe alkyle linéaire ou ramifié ayant 1 à 12 atomes de carbone ;
un groupe halogénoalkyle linéaire ou ramifié qui est substitué par au moins un atome d'halogène et qui a 1 à 6 atomes de carbone ;
un groupe cycloalkyle ayant 3 à 12 atomes de carbone ;
un groupe alcoxy linéaire ou ramifié ayant 1 à 6 atomes de carbone ;
un groupe phényle ou benzyle substitué ou non substitué ayant, en tant que substituant, dans le cas où le groupe $R_1$ ou $R_2$ de la formule (5) correspond indépendamment à un groupe aryle ou hétéroaryle, au moins l'un des substituants décrits ci-dessus dans la définition du groupe $R_1$ ou $R_2$ ;
$-NH_2$ et-NHR
où R est un groupe alkyle linéaire ou ramifié ayant 1 à 6 atomes de carbone ;
un groupe phénoxy ou naphtoxy substitué ou non substitué ayant, en tant que substituant, au moins un groupe alkyle ou groupe alcoxy linéaire ou ramifié ayant 1 à 6 atomes de carbone ; et
un groupe $-COR_9$, $-COOR_9$ ou $-CONHR_9$ où $R_9$ représente un groupe alkyle linéaire ou ramifié ayant 1 à 6 atomes de carbone, un groupe cycloalkyle ayant 3 à 6 atomes de carbone, ou un groupe phényle ou benzyle substitué ou non substitué ayant, en tant que substituant, dans le cas où le groupe $R_1$ ou $R_2$ de la formule (5) correspond indépendamment à un groupe aryle ou hétéroaryle, au moins l'un des substituants décrits ci-dessus

dans la définition du groupe $R_1$ ou $R_2$, et
dans le cas où A représente ($A_4$), n est un entier de 0 à 2, et p est un entier de 0 à 4, et dans le cas où A représente ($A_2$), n est un entier de 0 à 2.

**15.** Produit moulé selon l'une quelconque des revendications 1 à 14, dans lequel le rapport équivalent des groupes fonctionnels (B/A) du composé polyol (B) au composé polyisocyanate (A) est de 0,02 à 0,6, et le rapport équivalent des groupes fonctionnels (C/A) du composé d'hydrogène actif (C) au composé polyisocyanate (A) est de 0,4 à 0,98.

**16.** Matériau optique formé du produit moulé de l'une quelconque des revendications 1 à 15.

**17.** Lentille plastique formée du produit moulé de l'une quelconque des revendications 1 à 15.

**18.** Lentille plastique polarisée comprenant :

un film polarisant ; et
une couche de substrat formée du produit moulé de l'une quelconque des revendications 1 à 15, formée sur au moins une surface du film polarisant.

**19.** Composition polymérisable pour un matériau optique, comprenant :

un composé polyisocyanate (A) ;
un composé polyol (E) qui est représenté par la formule (1), et qui a une masse moléculaire moyenne en nombre égale ou supérieure à 100

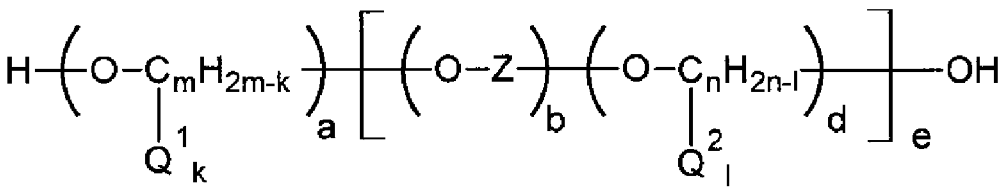

(1)

dans la formule (1), m représente une valeur numérique de 1 à 20, k vaut de 0 à 2m, n représente une valeur numérique de 1 à 20, l vaut de 0 à 2n, a représente une valeur numérique égale ou supérieure à 0, b représente une valeur numérique égale ou supérieure à 0, d représente une valeur numérique égale ou supérieure à 0, e représente une valeur numérique égale ou supérieure à 1, $Q^1$ représente un atome d'hydrogène ou un groupe alkyle ayant 1 à 6 atomes de carbone, plusieurs $Q^1$ existant ensemble peuvent être identiques ou différents, $Q^2$ représente un atome d'hydrogène ou un groupe alkyle ayant 1 à 6 atomes de carbone, plusieurs $Q^2$ existant ensemble peuvent être identiques ou différents, Z représente un groupe organique divalent ayant 1 à 30 atomes de carbone qui peut contenir un groupe aromatique, et plusieurs Z existant ensemble peuvent être identiques ou différents ;
un composé d'hydrogène actif bifonctionnel ou de fonctionnalité supérieure (C) ayant au moins un groupe SH ; et un composé photochrome (D),
dans laquelle le rapport molaire (groupes NCO / (groupes OH + groupes SH)) des groupes NCO inclus dans le composé polyisocyanate (A) à la somme des groupes OH et des groupes SH inclus dans le composé d'hydrogène actif (C) et le composé polyol (B)) est situé dans la plage allant de 1,1 à 1,6.

**20.** Procédé de fabrication d'une lentille plastique, comprenant :

une étape de mélange
d'un composé polyisocyanate (A),
d'un composé polyol (B) qui est représenté par la formule (1), et qui a une masse moléculaire moyenne en nombre égale ou supérieure à 100

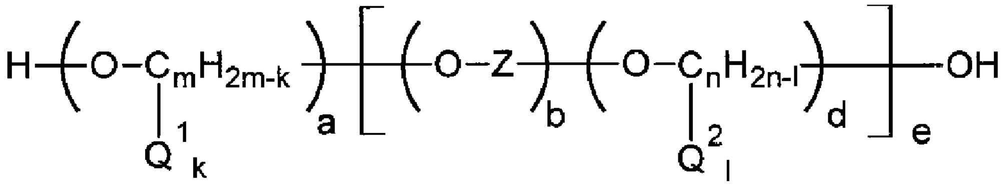

(1)

dans la formule (1), m représente une valeur numérique de 1 à 20, k vaut de 0 à 2m, n représente une valeur numérique de 1 à 20, l vaut de 0 à 2n, a représente une valeur numérique égale ou supérieure à 0, b représente une valeur numérique égale ou supérieure à 0, d représente une valeur numérique égale ou supérieure à 0, e représente une valeur numérique égale ou supérieure à 1, $Q^1$ représente un atome d'hydrogène ou un groupe alkyle ayant 1 à 6 atomes de carbone, plusieurs $Q^1$ existant ensemble peuvent être identiques ou différents, $Q^2$ représente un atome d'hydrogène ou un groupe alkyle ayant 1 à 6 atomes de carbone, plusieurs $Q^2$ existant ensemble peuvent être identiques ou différents, Z représente un groupe organique divalent ayant 1 à 30 atomes de carbone qui peut contenir un groupe aromatique, et plusieurs Z existant ensemble peuvent être identiques ou différents ;

d'un composé d'hydrogène actif bifonctionnel ou de fonctionnalité supérieure (C) ayant au moins un groupe SH ; et

d'un composé photochrome (D),

de façon que le rapport molaire (groupes NCO / (groupes OH + groupes SH)) des groupes NCO inclus dans le composé polyisocyanate (A) à la somme des groupes OH et des groupes SH inclus dans le composé d'hydrogène actif (C) et le composé polyol (B)) soit situé dans la plage allant de 1,1 à 1,6, pour préparer une composition polymérisable pour un matériau optique ; et

une étape de coulée et de polymérisation de la composition polymérisable pour un matériau optique dans un moule pour former un substrat de lentille.

**21.** Procédé de fabrication d'une lentille polarisée plastique, comprenant :

une étape de mélange

d'un composé polyisocyanate (A),

d'un composé polyol (B) qui est représenté par la formule (1), et qui a une masse moléculaire moyenne en nombre égale ou supérieure à 100

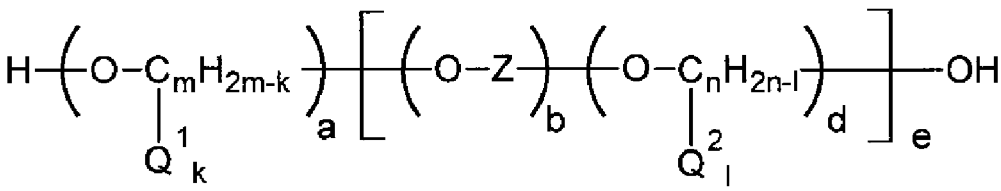

(1)

dans la formule (1), m représente une valeur numérique de 1 à 20, k vaut de 0 à 2m, n représente une valeur numérique de 1 à 20, l vaut de 0 à 2n, a représente une valeur numérique égale ou supérieure à 0, b représente une valeur numérique égale ou supérieure à 0, d représente une valeur numérique égale ou supérieure à 0, e représente une valeur numérique égale ou supérieure à 1, $Q^1$ représente un atome d'hydrogène ou un groupe alkyle ayant 1 à 6 atomes de carbone, plusieurs $Q^1$ existant ensemble peuvent être identiques ou différents, $Q^2$ représente un atome d'hydrogène ou un groupe alkyle ayant 1 à 6 atomes de carbone, plusieurs $Q^2$ existant ensemble peuvent être identiques ou différents, Z représente un groupe organique divalent ayant 1 à 30 atomes de carbone qui peut contenir un groupe aromatique, et plusieurs Z existant ensemble peuvent être identiques ou différents ;

d'un composé d'hydrogène actif bifonctionnel ou de fonctionnalité supérieure (C) ayant au moins un groupe SH ; et

d'un composé photochrome (D),

de façon que le rapport molaire (groupes NCO / (groupes OH + groupes SH)) des groupes NCO inclus dans le composé polyisocyanate (A) à la somme des groupes OH et des groupes SH inclus dans le composé d'hydrogène actif (C) et le composé polyol (B)) soit situé dans la plage allant de 1,1 à 1,6, pour préparer une composition polymérisable pour un matériau optique ;
une étape de fixation d'un film polarisant à un moule de coulée de lentille dans un état où il est séparé du moule ;
une étape d'injection de la composition polymérisable pour un matériau optique dans au moins une des cavités formées entre le film polarisant et le moule ; et
une étape de polymérisation et de durcissement de la composition polymérisable pour un matériau optique et de stratification d'une couche de substrat sur au moins une surface du film polarisant.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H08272036 B
- JP 2005023238 A
- JP 2008030439 A
- JP 2011144181 A
- WO 2014002844 A
- WO 2015115648 A
- US 6506538 B
- JP 2005305306 A
- WO 2005087829 A
- WO 2006109765 A
- WO 2007020817 A
- WO 2007020818 A
- WO 201378086 A
- WO 2012149599 A
- WO 2010020770 A
- WO 2009146509 A
- JP 2004500319 PCT
- WO 201020770 A
- WO 2012162725 A
- JP 2015183494 A
- JP 2015240357 A